# EUROPÄISCHE PATENTANMELDUNG

(11) **EP 2 752 321 A1**
(43) Veröffentlichungstag der Anmeldung: **09.07.2014**
(21) Anmeldenummer: 13150485.4
(22) Anmeldetag: 08.01.2013
(51) Int. Cl.: B60H 1/32, F28D 5/00, F24F 5/00, F24F 1/00

(54) **Verfahren zur Kühlung eines in einen Fahrgastraum eines Kraftfahrzeugs einzuleitenden Luftstroms**

(71) Anmelder: Weidmann Plastics Technology AG, 8640 Rapperswil (CH)
(72) Erfinder: Harke, Stefan, 8832 Wollerau (CH)
(74) Vertreter: Rutz, Andrea

(57) **Zusammenfassung**

Es wird ein Verfahren zur Kühlung eines in einen Fahrgastraum (11) eines Kraftfahrzeugs (1) einzuleitenden Luftstroms (110) mittels zumindest eines Kühlelements (3) angegeben. Das Kühlelement (3) weist einen von einer Wandung (31) begrenzten Innenraum (30) auf und zumindest ein Teil des Kühlelements (3) ist als Wärmeübertragungselement (31, 70, 71, 72) ausgebildet, um thermische Energie von ausserhalb des Kühlelements (3) in den Innenraum (30) zu übertragen. Das Verfahren weist zumindest die Schritte auf, dass der Luftstrom (110) zum Wärmeübertragungselement (31, 70, 71, 72) hingeleitet wird, und dass mittels zumindest einer Flüssigkeitsfördereinrichtung (6) eine Flüssigkeit in den Innenraum (30) zugeführt wird. Das Verfahren weist zudem den Schritt auf, dass mittels zumindest einer Vakuumvorrichtung (4) im Innenraum (30) ein derartiges Vakuum hergestellt wird, dass die im Innenraum (30) enthaltenen Flüssigkeit siedet und/oder sublimiert.

## Beschreibung

### TECHNISCHES GEBIET

Die vorliegende Erfindung betrifft ein Verfahren zur Kühlung eines in einen Fahrgastraum eines Kraftfahrzeugs einzuleitenden Luftstroms. Die Erfindung betrifft ausserdem eine Kühlanordnung für ein Kraftfahrzeug sowie ein Kraftfahrzeug mit einer derartigen Kühlanordnung.

### STAND DER TECHNIK

Zur Kühlung der Luft im Fahrgastraum wird bei Kraftfahrzeugen üblicherweise mittels eines Klimageräts Frischluft von aussen her angesaugt und in abgekühlter Form dem Fahrgastraum zugeführt. Klimageräte weisen hierzu üblicherweise einen Verdampfer auf, mit welchem die Frischluft auf eine erwünschte Temperatur abgekühlt werden kann. Zum Ansaugen der Luft weisen die Klimageräte zudem meist ein Luftfördermittel, wie insbesondere einen Ventilator auf.

Die Abkühlung der von aussen her angesaugten Frischluft im Klimagerät auf eine gewünschte Temperatur ist aufwändig und benötigt verhältnismässig viel Energie.

In der US 3,352,353 ist eine Kühlanordnung offenbart, bei welcher Kondenswasser aus Verbrennungsabgasen von einem saugfähigen Material aufgenommen wird. Dieses befeuchtete Material wird von Aussenluft überströmt, wodurch diese durch Verdunstung gekühlt wird. Das saugfähige Material wird von einer Vielzahl von Rohren eines Wärmeübertragers so durchdrungen, dass durch das Innere der Rohre strömende und dem Fahrzeugraum zuzuführende Luft gekühlt werden kann. Die Wirkung dieses Verfahrens in Bezug auf eine hohe Kühlleistung für die dem Fahrzeugraum zuzuführenden Luft ist aber auf die Verwendung von Aussenluft mit niedriger relativer Luftfeuchtigkeit begrenzt. Mit dem Verfahren wird keine Kühlwirkung mehr erzeugt, wenn die Aussenluft tropfenförmiges Wasser oder Wasser im festen Zustand enthält.

### DARSTELLUNG DER ERFINDUNG

Es ist also eine Aufgabe der vorliegenden Erfindung, ein Verfahren mit einer verbesserten Effizienz für die Kühlung eines Luftstromes, der in den Fahrgastraum eines Kraftfahrzeuges einzuleiten ist, anzugeben. Das Verfahren soll zudem mittels einer Kühlanordnung durchführbar sein, welche möglichst einfach und kostengünstig herstellbar ist. Zur Lösung dieser Aufgabe wird ein Verfahren vorgeschlagen, wie es in Anspruch 1 angegeben ist. In Anspruch 7 wird eine Kühlanordnung zur Kühlung eines in den Fahrgastraum eines Kraftfahrzeugs einzuleitenden Luftstroms angegeben, welches insbesondere für die Durchführung eines Verfahrens gemäss Anspruch 1 geeignet ist. Ausserdem wird in Anspruch 17 ein Kraftfahrzeug mit einer Kühlanordnung, insbesondere einer Kühlanordnung gemäss Anspruch 7, angegeben. Vorteilhafte Ausgestaltungen der Erfindung sind in den abhängigen Ansprüchen angegeben.

Die vorliegende Erfindung gibt also ein Verfahren zur Kühlung eines in einen Fahrgastraum eines Kraftfahrzeugs einzuleitenden Luftstroms mittels zumindest eines Kühlelements an, welches einen von einer Wandung begrenzten Innenraum aufweist, wobei zumindest ein Teil des Kühlelements, insbesondere der den Innenraum begrenzenden Wandung, als Wärmeübertragungselement ausgebildet ist, um thermische Energie von ausserhalb des Kühlelements in den Innenraum zu übertragen, wobei das Verfahren die folgenden Schritte aufweist:
- Hinleiten, insbesondere gezieltes Hinleiten, des Luftstroms zum Wärmeübertragungselement,
- Zuführen einer Flüssigkeit in den Innenraum mittels zumindest einer Flüssigkeitsfördereinrichtung,
- Herstellen zumindest eines derartigen Vakuums im Innenraum mittels zumindest einer Vakuumvorrichtung, dass die im Innenraum enthaltene Flüssigkeit siedet und/oder sublimiert.

Dadurch, dass im Innenraum des Kühlelementes ein derartiges Vakuum hergestellt wird, das geeignet ist, die im Innenraum enthaltene Flüssigkeit zum Sieden und/oder Sublimieren zu bringen, erfolgt eine äusserst effiziente Kühlung des zum Wärmeübertragungselement hingeleiteten Luftstroms. Bevorzugt wird im Innenraum sogar ein derartiges Vakuum hergestellt, dass zumindest ein Teil der im Innenraum enthaltenen Flüssigkeit zuerst gefriert und dann sublimiert.

Bei einem Absenken des Druckes im Innenraum des Kühlelementes tritt eine zunehmend stärker werdende Verdunstung der darin enthaltenen Flüssigkeit auf. Dies bewirkt eine Verdunstungskühlung, da sich von der Flüssigkeit Moleküle in die Dampfphase lösen, welche im Vergleich zu den übrigen in der Flüssigkeit enthaltenen Molekülen eine überdurchschnittliche kinetische Energie aufweisen, und sich dadurch die durchschnittliche, in der Flüssigkeit enthaltene kinetische Energie verringert. Dieser Effekt tritt in einer noch wesentlich verstärkten Weise auf, wenn der Druck im Innenraum des Kühlelementes zumindest soweit abgesenkt wird, dass die Flüssigkeit siedet und somit verdampft. Im Vergleich zur Verdunstung löst sich beim Verdampfen eine weitaus grössere Anzahl von Molekülen aus der Flüssigkeit. Falls die zum Wärmeübertragungselement hingeleitete Luft eine höhere Temperatur als die im Kühlelement befindliche Flüssigkeit aufweist, wird der Luft thermische Energie entzogen und durch das Wärmeübertragungselement hindurch auf die im Innenraum enthaltene Flüssigkeit übertragen. Der in den Fahrgastraum einzuleitende Luftstrom wird somit abgekühlt. Das Kühlelement weist zu diesem Zweck zumindest ein Wärmeübertragungselement auf bzw. zumindest ein Teil des Kühlelements ist als Wärmeübertragungselement ausgebildet.

Damit ein ausreichendes Vakuum im Innenraum des Kühlelements hergestellt werden kann, ist der Innenraum bevorzugt nach aussen hin im Wesentlichen abgeschlossen. Der Innenraum des Kühlelementes ist bevorzugt ausschliesslich mit der Vakuumvorrichtung sowie der Flüssigkeitsfördereinrichtung verbunden. Die Vakuumvorrichtung ist somit bevorzugt derart ausgestaltet, dass die Flüssigkeit im Innenraum des Kühlelementes zumindest sieden kann. Wird ein Vakuum hergestellt, welches dem Dampfdruck bei der zu Beginn vorherrschenden Temperatur der Flüssigkeit entspricht, stellt sich ein Gleichgewicht zwischen Dampfphase und Flüssigphase ein. Wird der Druck weiter abgesenkt bzw. das Vakuum weiter verstärkt, wird ein neues Gleichgewicht unter Absenkung der Temperatur der Flüssigkeit dadurch erreicht, dass weitere Flüssigkeit verdampft. Somit wird bevorzugt ein Druck hergestellt, welcher tiefer ist als der Druck, welcher dem Dampfdruck der Flüssigkeit bei der zu Beginn vorherrschenden Temperatur der Flüssigkeit entspricht. Dadurch kann die Temperatur der Flüssigkeit sogar soweit abgesenkt werden, dass die Flüssigkeit gefriert. Bei gefrorener Flüssigkeit herrscht ebenso ein Gleichgewicht zwischen Dampfphase und gefrorener Flüssigkeit, so dass bei einer weiteren Drucksenkung eine weitere Absenkung der Temperatur der gefrorenen Flüssigkeit durch Sublimation unter den Gefrierpunkt der Flüssigkeit erzielt werden kann. Die Vakuumvorrichtung kann kontinuierlich oder diskontinuierlich betrieben werden. Nach einer Weiterbildung der Erfindung weist die Vakuumvorrichtung zumindest einen Luftauslass auf. Der Luftauslass hat die Funktion, den im Innenraum des Kühlelementes entstehenden und in die Vakuumvorrichtung gelangenden Flüssigkeitsdampf aus der Vakuumvorrichtung abzuführen.

Das Zuführen der Flüssigkeit mit einer Flüssigkeitsfördereinrichtung in den Innenraum erfolgt bevorzugt unter Ausnützung des Kapillareffektes zum Beispiel mittels eines Dochtes, eines Vlieses oder eines schwammartigen Materials. Es kann beispielsweise aber auch eine Pumpe als Flüssigkeitsfördereinrichtung verwendet werden. Es kann jedwede Flüssigkeitsfördereinrichtung verwendet werden, welche die Aufgabe der Flüssigkeitsförderung erfüllt.

Nach einer Weiterbildung der Erfindung ist die Flüssigkeitsfördereinrichtung mit zumindest einer Flüssigkeitsquelle, wie beispielsweise einem Flüssigkeitsreservoir, verbunden aus welcher die Flüssigkeitsfördervorrichtung die in den Innenraum zu fördernde Flüssigkeit bezieht. Die Flüssigkeitsfördereinrichtung ist beispielsweise mittels zumindest einer Leitung mit der Flüssigkeitsquelle verbunden.

Nach einer Weiterbildung der Erfindung ist zumindest eine Flüssigkeitsquelle, aus welcher die Flüssigkeitsfördereinrichtung die zu fördernde Flüssigkeit bezieht, in der Flüssigkeitsfördereinrichtung selbst enthalten, wie beispielsweise in der Form eines Flüssgkeitsreservoirs und / oder einer Tasche.

Nach einer Weiterbildung der Erfindung weist zumindest ein Kühlelement zumindest ein Flüssigkeitsreservoir und / oder Tasche auf, in welchem die zu siedende und / oder zu sublimierende Flüssigkeit gespeichert ist.

Grundsätzlich kann jede Flüssigkeit verwendet werden, die die geforderte Abkühlwirkung ermöglicht. Bevorzugt sind Flüssigkeiten, deren Siedepunkt bereits bei atmosphärischen Normalbedingungen, d.h. bei einem Luftdruck von ca. 1013 hPa, bei weniger als 120°C, vorteilhafter bei 100°C oder weniger, liegt. Besonders bevorzugt ist die Flüssigkeit Wasser, da Wasser beispielsweise beim Betrieb von Kraftfahrzeugen anfällt und / oder weil Kraftfahrzeuge Wasserreservoirs enthalten, wobei dieses Wasser bei der Durchführung des erfindungsgemässen Verfahrens verwendbar ist.

Vorteilhaft wird als Flüssigkeit Wasser verwendet, welches in Form von Kondenswasser, insbesondere im Bereich eines Verdampfers, insbesondere eines in einem Klimamodul enthaltenen Verdampfers, anfällt. Vorteilhaft wird als Flüssigkeit Kondenswasser verwendet, welches an zumindest einem Kühlelement anfällt. Vorteilhaft wird Wasser verwendet, welches in einem Wasserkasten aus der den Wasserkasten durchströmenden Luft abgeschieden wird. Selbstverständlich kann auch ein Flüssigkeitsreservoir vorgesehen sein, welches extern, beispielsweise während eines Tankstopps, mit Flüssigkeit befüllt wird.

Vorteilhaft handelt es sich bei der Flüssigkeit um Wasser, wobei im Innenraum des Kühlelements ein derartiges Vakuum hergestellt wird, dass der Siedepunkt des Wassers im Innenraum bei weniger als 50°C, vorteilhafter bei weniger als 30°C und am vorteilhaftesten sogar bei weniger als 10°C liegt. Wenn der Druck im Innenraum beispielsweise auf einen Restdruck von 23 hPa abgesenkt wird, beginnt bereits Wasser mit einer Temperatur von 20°C zu sieden und entsprechend eine sehr effiziente Kühlwirkung in Bezug auf den Luftstrom zu entfalten. Bevorzugt wird der Druck im Innenraum insbesondere kontinuierlich gesenkt. Der im Innenraum vorliegende Druck kann aber insbesondere auch derart geregelt werden, dass eine gewünschte tiefere Temperatur der Flüssigkeit im Innenraum als die Ausgangstemperatur der Flüssigkeit, welche in den Innenraum gefördert wurde, einstellbar ist.

Bevorzugt wird mittels der Vakuumvorrichtung der im Innenraum des Kühlelements vorliegende Druck soweit gesenkt, dass die im Innenraum enthaltene Flüssigkeit gefriert. Der Vorteil, welcher sich daraus ergibt, besteht darin, dass die gefrorene Flüssigkeit im Innenraum des Kühlelements nun als Latentwärmespeicher wirkt und dadurch selbst nach einem Ausschalten der Vakuumvorrichtung während einer gewissen Zeit noch eine Kühlwirkung entfaltet. Der Fahrgastraum eines Kraftfahrzeugs kann dadurch nach einem Unterbruch der gesamten Kühlanlage oder des Klimamoduls und insbesondere nach einem Motorstopp umgehend und mit von Anfang an hoher Effizienz wieder gekühlt werden. Besonders vorteilhaft wird mittels eines Luftfördermittels, wie zum Beispiel eines Ventilators, ein Ansaugen von Luft auch bei einem Unterbruch der gesamten Kühlanlage oder des Klimamoduls noch für eine bestimmte Zeit, insbesondere für mehr als 3 min oder sogar für mehr als 10 min, aufrechterhalten, damit der Fahrgastraum während des Unterbruchs, beispielsweise während eines Ampelstopps, weiterhin und bei einem sehr geringen Energieverbrauch von einem in den Fahrgastraum einströmenden Luftstrom gekühlt wird.

Vorteilhaft weist das Verfahren noch einen weiteren Schritt auf, in welchem der Luftstrom mittels eines Verdampfers, der bevorzugt einen Teil eines Klimamoduls bildet, zusätzlich gekühlt wird. Die grundsätzliche Funktionsweise eines Verdampfers bzw. eines Klimamoduls mit einem Verdampfer ist dem Fachmann bekannt. Das Verfahren kann somit insbesondere zur Vorkühlung eines Luftstroms vor Erreichen des Verdampfers bzw. eines in einem Klimamodul enthaltenen Verdampfers dienen. Der Luftstrom muss somit mit Hilfe des erfindungsgemässen Verfahrens nur teilweise abgekühlt werden. Da die einzuleitende Luft vor Erreichen des Verdampfers mittels zumindest eines Kühlelements bereits vorgekühlt worden ist, sind die Anforderungen an die Kühlleistung des dem Kühlelement nachgeschalteten Verdampfers geringer. Somit kann der Verdampfer einfacher bzw. kleiner dimensioniert werden im Vergleich zu Verdampfer, welche nicht vorgekühlte Luft kühlen. Aufgrund der einfacheren bzw. kleineren Dimensionierung des Verdampfers weist der Verdampfer bzw. das den Verdampfer aufweisende Klimamodul einen geringeren Raumbedarf auf und / oder kann energieeffizienter betrieben werden.

Selbstverständlich kann durch das erfindungsgemässe Verfahren auch eine Nachkühlung des durch den Verdampfer bzw. des durch im Klimamodul enthaltenen Verdampfers vorgekühlten Luftstroms erfolgen. Somit kann mittels des erfindungsgemässen Verfahrens der dem Verdampfer zuzuführende Luftstrom vorgekühlt und / oder der bereits durch den Verdampfer gekühlte Luftstrom nachgekühlt werden.

In einer insbesondere bevorzugten Ausführungsform weist das beim erfindungsgemässen Verfahren verwendete Kühlelement ein saugfähiges Material auf, welches im Innenraum angeordnet ist und zur Aufnahme der Flüssigkeit dient. Das saugfähige Material dient somit insbesondere dazu, die Flüssigkeit im Innenraum des Kühlelements zu halten und zu speichern. Das saugfähige Material wird also insbesondere von der Flüssigkeit getränkt. Mittels des saugfähigen Materials kann die Flüssigkeit zudem insbesondere an diejenigen Stellen im Innenraum gebracht werden, welche sich nahe zum oder am Wärmeübertragungselement befinden. Die Kühlung wird dadurch noch effizienter. Als saugfähiges Material wird vorteilhaft ein poröses Material verwendet, da dann in der Regel eine besonders grosse und gut wärmeleitende Oberfläche vorhanden ist. Beim saugfähigen Material kann es sich zum Beispiel um ein filzartiges, ein vliesartiges oder ein schwammartiges Material handeln. Dem Fachmann sind solche Materialien bekannt.

Gemäss einer Weiterbildung der Erfindung wird die Stärke des Vakuums in Abhängigkeit der Temperatur des in den Fahrgastraum einströmenden und/oder einzuleitenden Luftstroms und/oder einer im Fahrgastraum vorliegenden Lufttemperatur und/oder einer ausserhalb des Kraftfahrzeugs vorliegenden Lufttemperatur geregelt. Dadurch kann eine optimale Temperatureinstellung erreicht werden. Grundsätzlich kann die Temperatur der Luft überall auf dem Weg der Luft in den Fahrgastraum und / oder im Fahrgastraum selbst gemessen werden und unter Berücksichtigung der Temperaturdaten die Stärke des Vakuums gesteuert bzw. geregelt werden.

Nach einer Weiterbildung der Erfindung ist zur Durchführung des erfindungsgemässen Verfahrens zumindest ein Luftfördermittel, insbesondere ein Ventilator, vorgesehen, zum Hintransportieren von Luft zum Fahrgastraum sowie zum Hineintransportieren der hintransportierten Luft in den Fahrgastraum. Beim Hintransport der Luft zum Fahrgastraum überströmt bzw. umströmt die Luft zumindest ein Kühlelement.

Die vorliegende Erfindung stellt ausserdem eine Kühlanordnung für ein Kraftfahrzeug mit einem Fahrgastraum, zur Kühlung eines in den Fahrgastraum einzuleitenden Luftstroms zur Verfügung. Die Kühlanordnung dient insbesondere zur Durchführung des oben erläuterten Verfahrens. Die Kühlanordnung weist zumindest ein Kühlelement auf mit einem von einer Wandung begrenzten Innenraum, wobei zumindest ein Teil des Kühlelements, insbesondere der den Innenraum begrenzenden Wandung, als Wärmeübertragungselement ausgebildet ist, um thermische Energie von ausserhalb des Kühlelements in den Innenraum zu übertragen. Die Kühlanordnung weist zudem eine Leitstruktur auf, welche dazu geeignet ist, den einzuleitenden Luftstrom, insbesondere gezielt, zum Wärmeübertragungselement hinzuleiten, sowie zumindest eine Flüssigkeitsfördereinrichtung zum Zuführen einer Flüssigkeit, wie insbesondere Wasser, in den Innenraum. Die Kühlanordnung weist ausserdem zumindest eine Vakuumvorrichtung zum Herstellen zumindest eines derartigen Vakuums im Innenraum auf, dass die im Innenraum enthaltene Flüssigkeit siedet und/oder sublimiert.

Vorteilhaft ist ein Grossteil des Kühlelementes, vorteilhafter im Wesentlichen das gesamte Kühlelement, als Wärmeübertragungselement ausgebildet.

Vorteilhaft bildet zumindest ein Teil der den Innenraum begrenzenden Wandung, vorteilhafter zumindest ein Grossteil der Wandung, noch vorteilhafter im Wesentlichen die gesamte Wandung, das Wärmeübertragungselement. Die Wandung ist hierzu insbesondere zylindrisch, kann aber jedwede andere geometrische Form annehmen. Die Wandung ist vorteilhaft aus einem ausreichend wärmeleitenden Material, wie insbesondere einem Metall oder einem mineral- oder metallgefüllten thermoplastischen Kunststoff, ausgebildet. Am Wärmeübertragungselement können Oberflächenstrukturen, wie insbesondere Rippen ausgebildet sein, um die Oberfläche zu vergrössern und dadurch die Wärmeübertragungskapazität zu erhöhen. Die Übertragung von thermischer Energie vom Luftstrom in den Innenraum des Kühlelements ist dann besonders effizient.

Als Leitstruktur wird jegliche Struktur verstanden, welche dazu geeignet ist, einen Luftstrom, insbesondere gezielt, zum Wärmeübertragungselement hinzuleiten. Bevorzugt ist die Leitstruktur auch geeignet, den Luftstrom vom Wärmeübertragungselement wegzuleiten, insbesondere vom Wärmeübertragungselement gezielt wegzuleiten. Besonders bevorzugt bildet die Leitstruktur zumindest einen Hohlkörper mit zumindest einer Lufteinlassöffnung, insbesondere einer Frischlufteinlassöffnung, und zumindest einer Luftauslassöffnung, wobei die Lufteinlassöffnung und die Luftauslassöffnung mittels eines Raumes miteinander verbunden sind, der durch eine Innenfläche begrenzt ist, wobei durch die mindestens eine Lufteinlassöffnung Luft in den Raum einströmen kann und durch die mindestens eine Luftauslassöffung Luft aus dem Raum ausströmen kann. Mit der Formulierung "die Leitstruktur bildet zumindest einen Hohlkörper" ist gemeint, dass die Leitstruktur einen Hohlkörper bildet und optional weitere Strukturen bilden kann, wie beispielsweise einen weiteren Hohlkörper. Grundsätzlich sind beliebige Anordnungen der zumindest einen Lufteinlassöffung im Kraftfahrzeug möglich. Bevorzugt ist die Lufteinlassöffnung in einem Spalt zwischen der Windschutzscheibenunterkante und der Motorhaube und / oder in oder unterhalb eines Durchbruchs in der Motorhaube und / oder im Fahrgastraum angeordnet. Grundsätzlich sind auch beliebige Anordnungen der zumindest einen Luftauslassöffung im Kraftfahrzeug möglich. Bevorzugt mündet die zumindest eine Luftauslassöffnung in den Fahrgastraum. Besonders bevorzugt sind mehrere Luftauslassöffnungen derart vorgesehen, dass im Fahrgastraum befindliche Personen mit der gekühlten Luft versorgt werden können. Es kann sich beim Hohlkörper beispielsweise um ein rohrförmiges Element, zumindest einen Teil eines Wasserkastens oder zumindest einen Teil eines Klimamoduls handeln. Grundsätzlich kann der Hohlkörper jegliche Strukturen bilden, welche geeignet sind, Luft zu leiten.

Üblicherweise wird die den Raum des Hohlkörpers begrenzende Innenfläche zumindest teilweise, insbesondere im Wesentlichen vollständig, durch eine Wandung des Hohlkörpers gebildet.

Vorteilhaft bildet zumindest ein Teil der Wandung, insbesondere zumindest ein Grossteil, das heisst mehr als 50% der Wandung, welche den Innenraum des Kühlelements begrenzt, zumindest teilweise die den Raum des Hohlkörpers begrenzende Innenfläche. Insbesondere vorteilhaft bildet zumindest ein Teil der Wandung, insbesondere zumindest ein Grossteil der Wandung, welche den Innenraum des Kühlelements begrenzt, sogar im Wesentlichen die gesamte den Raum des Hohlkörpers begrenzende Innenfläche. Somit bildet zumindest ein Teil der Wandung des Kühlelementes zumindest einen Teil der Wandung des Hohlkörpers, welche die den Raum des Hohlkörpers begrenzende Innenfläche bildet.

Vorteilhaft ist zumindest ein Kühlelement zumindest teilweise, bevorzugt vollständig, im Raum des Hohlkörpers angeordnet. Im Raum des Hohlkörpers kann somit beispielsweise zumindest ein Kühlelement derart angeordnet sein, dass eine effiziente Kühlung der durch den Raum des Hohlkörpers hindurchströmenden Luft durch das zumindest eine Kühlelement erzielt werden kann, und / oder dass durch das zumindest eine Kühlelement eine effiziente Abscheidung von Wasser aus der durch den Hohlkörper hindurchströmenden Luft bewirkt werden kann.

Nach einer Weiterbildung der Erfindung sind die Vakuumvorrichtung, die Flüssigkeitsfördereinrichtung sowie das Flüssigkeitsreservoir ausserhalb des Raums des Hohlkörpers angeordnet.

Nach einer Weiterbildung der Erfindung ist die Vakuumvorrichtung mittels zumindest einer Leitung mit dem Kühlelement verbunden, die Flüssigkeitsfördereinrichtung mittels zumindest einer Leitung mit dem Kühlelement verbunden sowie die Flüssigkeitsfördereinrichtung mittels zumindest einer Leitung mit der Flüssigkeitsquelle verbunden. Bei diesem Aggregat ist bevorzugt das Kühlelement im Raum des Hohlkörpers angeordnet und die Vakuumvorrichtung, die Flüssigkeitsfördereinrichtung sowie die Flüssigkeitsquelle in einem den Hohlkörper umgebenden Raum angeordnet, so dass sich die genannten Leitungen vom Raum des Hohlkörpers durch eine die Innenseite des Hohlkörpers bildende Wandung in den den Hohlkörper umgebenden Raum erstrecken.

Besonders bevorzugt bildet der Hohlkörper zumindest einen Teil eines Wasserkastens mit einem von der durch den Hohlkörper gebildeten Innenfläche begrenzten Hohlraum, zumindest einer Lufteinlassöffnung, durch welche hindurch Luft in den Hohlraum einströmen kann, zumindest einer Luftauslassöffnung, durch welche hindurch Luft aus dem Hohlraum ausströmen kann, sowie zumindest einer Wasseraustrittsöffnung, welche zum Abführen von Wasser aus dem Hohlraum geeignet ist. Dem Fachmann sind der grundsätzliche Aufbau sowie die Funktionsweise eines Wasserkastens bekannt. Mit der Formulierung "der Hohlkörper bildet zumindest einen Teil eines Wasserkastens" ist gemeint, dass der Hohlkörper zumindest einen Teil eines Wasserkastens bildet und optional noch weitere Strukturen, wie beispielsweise zumindest einen Teil eines Klimamoduls, zumindest einen Teil eines weiteren Wasserkastens oder zumindest ein rohrförmiges Element, bilden kann. Bevorzugt bildet der Hohlkörper zumindest einen Grossteil des Wasserkastens. Der Wasserkasten ist bevorzugt teilweise, insbesondere sogar zu einem Grossteil, doppelwandig ausgebildet, mit einer Innenwandung und einer Aussenwandung und einem dazwischen ausgebildeten Innenraum, in welchen mittels der Flüssigkeitsfördereinrichtung eine Flüssigkeit zuführbar ist, und in welchem mittels der Vakuumvorrichtung ein Vakuum herstellbar ist. Vorteilhaft ist die Innenwandung, welche somit hier das Wärmeübertragungselement bildet, aus einem ausreichend wärmeleitenden Material, wie beispielsweise einem Metall, also zum Beispiel Aluminium, oder einem mineral- oder metallgefüllten thermoplastischen Kunststoff, hergestellt. Die den Innenraum des Kühlelementes begrenzende Wandung umfasst somit die Innenwandung sowie die Aussenwandung, wobei die Innenwandung zumindest teilweise die Innenfläche des Hohlkörpers bildet, welche den Hohlraum des Wasserkastens begrenzt. Das Kühlelement bildet somit bevorzugt einen Teil des Wasserkastens. In dem sich zwischen der Innenwandung und der Aussenwandung erstreckenden Innenraum des Kühlelements ist bevorzugt ein saugfähiges Material angeordnet, das zur Aufnahme der Flüssigkeit dient. Besonders bevorzugt ist das saugfähige Material dabei an der üblicherweise den Hohlraum des Wasserkastens begrenzenden Innenwandung angebracht, welche in diesem Fall das Wärmeübertragungselement bildet. Die Innenwandung kann insbesondere durch zumindest einen Teil einer Deckenwandung, einer Seitenwandung und/oder einer Bodenwandung des Wasserkastens gebildet sein, welche den Hohlraum des Wasserkastens nach oben hin, seitlich bzw. nach unten hin begrenzen. Das saugfähige Material kann an der Deckenwandung und/oder der Seitenwandung und/oder der Bodenwandung angebracht sein. Eine solche Ausgestaltung ermöglicht eine räumlich besonders kompakte Ausgestaltung des Wasserkastens bzw. eines zumindest ein Kühlelement aufweisenden Wasserkastens.

Vorteilhaft weist der Wasserkasten ein im Hohlraum angeordnetes Umlenkelement auf, welches zum Abscheiden von Wasser aus der den Hohlraum durchströmenden Luft dient, wobei das Umlenkelement zumindest teilweise, vorzugsweise zu einem Grossteil, durch die Wandung des Kühlelements gebildet ist. Das Umlenkelement bzw. das Kühlelement bildet somit einen Teil des Wasserkastens. Das Umlenkelement weist somit vorteilhaft einen Innenraum auf, welcher zumindest einen Teil des Innenraums des Kühlelements bildet. Bevorzugt ist das Umlenkelement derart ausgebildet und angeordnet, dass es von der den Hohlraum durchströmenden Luft horizontal und/oder vertikal umströmt wird. Indem das Umlenkelement vorteilhaft zumindest zum Teil auch das Kühlelement bildet, kann eine effiziente Übertragung der thermischen Energie vom Luftstrom in den Innenraum erfolgen. Besonders vorteilhaft ist im Innenraum des Umlenkelements saugfähiges Material vorhanden. Eine solche Ausgestaltung ermöglicht eine besonders effiziente Nutzung des Bauraumes für eine Wasserabscheide- und eine Luftkühlfunktion des Wasserkastens, insbesondere einer gleichzeitigen Abscheide- und Kühlfunktion des Wasserkastens.

Nach einer Weiterbildung der Erfindung ist zumindest teilweise, bevorzugt vollständig, im Hohlraum des Wasserkastens zumindest ein Kühlelement angeordnet, welches derart ausgebildet und angeordnet ist, dass dieses zum Abscheiden von Wasser aus der den Hohlraum durchströmenden Luft dient. Nach einer Weiterbildung der Erfindung ist zumindest ein Kühlelement derart ausgebildet und im Hohlraum des Wasserkastens angeordnet, dass es von der den Hohlraum durchströmenden Luft horizontal und/oder vertikal umströmt wird. Das aus der Luft durch diesen Umströmvorgang abgeschiedene Wasser kann der genannten Flüssigkeitsquelle wieder zugeführt werden.

Nach einer Weiterbildung der Erfindung ist der Hohlraum des Wasserkastens, beispielsweise über zumindest eine rohrförmige Leitung, mit der zumindest einen Lufteinlassöffnung und/oder der zumindest einen Luftauslassöffnung des Hohlkörpers verbunden. Zumindest ein Teil des Wasserkastens sowie die zumindest eine rohrförmige Leitung werden dabei durch die Leitstruktur bzw. den Hohlkörper gebildet.

Nach einer Weiterbildung der Erfindung entspricht die zumindest eine Lufteinlassöffnung des Wasserkastens der zumindest einen Lufteinlassöffnung des Hohlkörpers und/oder die zumindest eine Luftauslassöffnung des Wasserkastens entspricht der zumindest einen Luftauslassöffnung des Hohlkörpers. Zumindest ein Teil des Wasserkastens wird dabei durch die Leitstruktur bzw. den Hohlkörper gebildet.

Nach einer Weiterbildung der Erfindung bildet der Hohlkörper zumindest einen Teil eines Klimamoduls mit einem von der Innenfläche des Hohlkörpers begrenzten Hohlraum, zumindest einer Lufteinlassöffnung, durch welche hindurch Luft in den Hohlraum einströmen kann, zumindest einer Luftauslassöffnung, durch welche hindurch Luft aus dem Hohlraum ausströmen kann, sowie zumindest einem Luftfördermittel und/oder einer Heizung und/oder einem Verdampfer und/oder einem Kühlelement. Das Luftfördermittel und/oder die Heizung und/oder der Verdampfer und/oder das Kühlelement bildet/bilden somit einen Teil des Klimamoduls. Dem Fachmann sind der grundsätzliche Aufbau sowie die Funktionsweise eines Klimamoduls bekannt. Mit der Formulierung "der Hohlkörper bildet zumindest einen Teil eines Klimamoduls" ist gemeint, dass der Hohlkörper zumindest einen Teil eines Klimamoduls bildet und optional noch weitere Strukturen, wie beispielsweise zumindest einen Teil eines Wasserkastens oder zumindest eine rohrförmige Leitung, bilden kann. Das Luftfördermittel kann beispielsweise im Klimamodul und/oder an einem anderen Ort im Raum des Hohlkörpers angeordnet sein. Falls gewünscht, kann im Klimamodul eine Heizung vorgesehen sein. Nach einer Weiterbildung der Erfindung weist das Klimamodul zumindest einen Verdampfer auf. Üblicherweise ist das Klimamodul im Fahrgastraum angeordnet, insbesondere in einem Raum zwischen dem Armaturenbrett und der Stirnwand oder in einem anderen im Fahrgastraum angeordneten Bereich. Das Klimamodul kann beispielsweise Teil eines Klimageräts, zu welchem meist zumindest noch ein Kompressor sowie ein Verflüssiger gehören, die üblicherweise aber im Frontbereich eines Kraftfahrzeuges, wie beispielsweise im Motorraum, angeordnet sind. Das Kühlelement kann vollständig im Inneren des Gehäuses des Klimamoduls angeordnet sein, so dass es insbesondere im Wesentlichen vollständig vom Luftstrom umströmt wird, oder es kann, ähnlich wie beim Wasserkasten, einen Teil des Gehäuses des Klimamoduls bilden, welches in diesem Fall zumindest teilweise oder sogar im Wesentlichen vollständig doppelwandig ausgebildet sein kann. Falls das Klimamodul einen Verdampfer aufweist, kann das Kühlelement beispielsweise derart angeordnet sein, dass die zu kühlende Luft zuerst an zumindest einem Kühlelement und dann am Verdampfer entlangströmt. Die Kühlanordnung mit dem Kühlelement dient dann insbesondere zum Vorkühlen des Luftstroms. Ebenfalls ist es möglich, dass die zu kühlende Luft zuerst am Verdampfer und danach an zumindest einem Kühlelement entlangströmt. Selbstverständlich ist auch die Variante möglich, bei welcher die Luft zuerst an zumindest einem Kühlelement, danach am Verdampfer und sodann wieder an zumindest einem Kühlelement entlangströmt. Vorteilhaft wird bei derartigen Klimamodulen das am Verdampfer und / oder am Kühlelement anfallende Kondenswasser von der Flüssigkeitsfördereinrichtung direkt oder indirekt in den Innenraum des Kühlelements zugeführt. Bevorzugt ist das zumindest eine im Hohlraum des Klimamoduls angeordnete Kühlelement derart ausgestaltet und angeordnet, dass mittels diesem Wasser aus der durch das Klimamodul hindurchströmenden Luft abgeschieden werden kann. Dieses abgeschiedene Wasser wird bevorzugt wieder einem Wasserreservoir zugeführt.

Nach einer Weiterbildung der Erfindung ist das Klimamodul zur Kühlung des in den Fahrgastraum einzuleitenden Luftstroms mittels im Wesentlichen ausschliesslich dem zumindest einen Kühlelement geeignet. Das Klimamodul weist somit für die Kühlung zusätzlich zum Kühlelement insbesondere keinen Verdampfer auf. Bei einer derartigen Ausführungsform wird die Kühlleistung im Wesentlichen ausschliesslich von zumindest einem im Klimamodul enthaltenen Kühlelement bewerkstelligt. Nach einer Weiterbildung der Erfindung enthält das Klimamodul für die Bewerkstelligung der Kühlung ausschliesslich zumindest ein Kühlelement, bevorzugt ausschliesslich eine Mehrzahl von Kühlelementen. Bei dieser Ausführungsform erbringt ausschliesslich das zumindest eine Kühlelement die gesamte Kühlleistung des Klimamoduls. Bei einer solchen Anordnung kann auf ein Klimagerät mit einem Kompressor, einem Verflüssiger und einem Verdampfer verzichtet werden, so dass ein besonders einfacher, kostengünstiger Aufbau eines Klimamoduls resultiert.

Nach einer Weiterbildung der Erfindung entspricht die zumindest eine Luftauslassöffnung des Klimamoduls der zumindest einen Luftauslassöffnung des Hohlkörpers und/oder die zumindest eine Lufteinlassöffnung des Klimamoduls entspricht der zumindest einen Lufteinlassöffnung des Hohlkörpers. Zumindest ein Teil des Klimamoduls wird durch die Leitstruktur bzw. den durch die Leitstruktur gebildeten Hohlkörper gebildet.

Nach einer Weiterbildung der Erfindung ist zumindest eine Luftauslassöffnung des Klimamoduls, beispielsweise über zumindest eine rohrförmige Leitung, mit der zumindest einen Luftauslassöffnung des Hohlkörpers verbunden und/oder zumindest eine Lufteinlassöffnung des Klimamoduls ist, beispielsweise über zumindest eine rohrförmige Leitung, mit der zumindest einen Lufteinlassöffnung des Hohlkörpers verbunden. Zumindest ein Teil des Klimamoduls sowie die rohrförmige Leitung werden dabei durch die Leitstruktur bzw. den durch die Leitstruktur gebildeten Hohlkörper gebildet.

Nach einer Weiterbildung der Erfindung bildet die Leitstruktur bzw. der durch die Leitstruktur gebildete Hohlkörper zumindest einen Teil eines Wasserkastens und/oder eines Klimamodul.

Nach einer Weiterbildung der Erfindung weist die Kühlanordnung zumindest ein Luftfördermittel, insbesondere einen Ventilator, auf, zum Hintransportieren von Luft zum Fahrgastraum sowie zum Hineintransportieren der hintransportierten Luft in den Fahrgastraum. Beim Hintransport der Luft zum Fahrgastraum überströmt bzw. umströmt die Luft zumindest ein Kühlelement.

Die Erfindung stellt zudem ein Kraftfahrzeug mit einem Fahrgastraum und zumindest einer wie oben aufgeführt erfindungsgemäss ausgebildeten Kühlanordnung zur Kühlung eines in den Fahrgastraum einzuleitenden Luftstroms zur Verfügung, wobei die Kühlanordnung zumindest ein Kühlelement mit einem von einer Wandung begrenzten Innenraum aufweist, und wobei zumindest ein Teil des Kühlelements, insbesondere der den Innenraum begrenzenden Wandung, als Wärmeübertragungselement ausgebildet ist, um thermische Energie von ausserhalb des Kühlelements in den Innenraum zu übertragen. Die Kühlanordnung weist zudem eine Leitstruktur auf, welche dazu geeignet ist, den einzuleitenden Luftstrom, insbesondere gezielt, zum Wärmeübertragungselement hinzuleiten, zumindest eine Flüssigkeitsfördereinrichtung zum Zuführen einer Flüssigkeit in den Innenraum, sowie zumindest eine Vakuumvorrichtung zum Herstellen zumindest eines derartigen Vakuums im Innenraum, dass die im Innenraum enthaltene Flüssigkeit siedet und/oder sublimiert.

Das Kraftfahrzeug dient insbesondere zum Durchführen des oben aufgeführten erfindungsgemässen Verfahrens zur Kühlung eines in den Fahrgastraum des Kraftfahrzeugs einzuleitenden Luftstroms.

Bevorzugt ist der Strömungsweg der Luft im Kraftfahrzeug zum Fahrgastraum hin möglichst lang. Je länger der Strömungsweg ist, desto mehr Kühlelemente können längs des Strömungsweges der Luft angeordnet werden, an welchen die Luft entlangströmt, und desto besser ist die Kühlwirkung der Kühlanordnung.

Nach einer Weiterbildung der Erfindung weist die Kühlanordnung des Kraftfahrzeugs, bevorzugt eine eine Klimaanlage oder ein Klimamodul umfassende Kühlanordnung, bevorzugter das gesamte Kraftfahrzeug, kein Luftfördermittel auf. In den genannten Fällen befördert der Staudruck während der Fahrt des Kraftfahrzeuges die Luft in den Fahrgastraum. Insbesondere bevorzugt ist die Kühlanordnung derart ausgebildet und angeordnet, dass die Luftbeförderung in der Kühlanordnung im Wesentlichen ausschliesslich mittels des Staudrucks bewerkstelligt wird. Diese Weiterbildung ermöglicht einen einfachen Aufbau eines Kraftfahrzeuges. Solche einfach aufgebauten Fahrzeuge können beispielsweise als Stadtfahrzeuge eingesetzt werden.

Nach einer Weiterbildung der Erfindung weist das Kraftfahrzeug eine Stirnwand auf, welche den Motorraum vom Fahrgastraum trennt.

Bevorzugt ist ein zumindest teilweise durch die Leitstruktur des Kraftfahrzeuges bzw. ein durch den durch die Leitstruktur gebildeten Hohlkörper zumindest teilweise gebildeter Wasserkasten im Motorraum sowie ein zumindest teilweise durch den Hohlkörper zusätzlich gebildetes Klimamodul im Fahrgastraum angeordnet. Der Wasserkasten und das Klimamodul können unmittelbar oder zusätzlich durch den Hohlkörper gebildete Strukturen, wie beispielsweise zumindest einer rohrförmigen Leitung, miteinander verbunden sein. Hierbei kann sich die rohrförmige Leitung durch einen Durchbruch in der Stirnwand hindurcherstrecken.

Nach einer Weiterbildung der Erfindung bildet die Leitstruktur des Kraftfahrzeuges zumindest einen Hohlkörper mit zumindest einer Lufteinlassöffnung und zumindest einer Luftauslassöffnung, wobei die Lufteinlassöffnung und die Luftauslassöffnung mittels eines Raumes miteinander verbunden sind, welcher durch eine Innenfläche begrenzt ist, wobei der Hohlkörper zumindest einen Teil eines ersten Klimamoduls bildet mit einem von der Innenfläche des Hohlkörpers begrenzten Hohlraum, zumindest einer Lufteinlassöffnung, welche derart mit dem Fahrgastraum verbunden ist, dass durch die Lufteinlassöffnung hindurch Luft aus dem Fahrgastraum in den Hohlraum des Klimamoduls einströmen kann sowie zumindest einer Luftauslassöffnung, welche derart mit dem Fahrgastraum verbunden ist, dass durch die Luftauslassöffnung hindurch Luft aus dem Hohlraum des ersten Klimamoduls in den Fahrgastraum ausströmen kann, wobei das erste Klimamodul zumindest ein Kühlelement aufweist, und wobei im Hohlkörper und / oder im ersten Klimamodul zumindest ein Luftfördermittel angeordnet ist zum Ansaugen von Luft aus dem Fahrgastraum in das erste Klimamodul. Diese Weiterbildung ermöglicht eine Umluftzirkulation, wobei die Umluft gekühlt werden kann. Dadurch erlaubt die Weiterbildung eine besonders energieeffiziente Betriebsweise des Kraftfahrzeuges.

Nach einer Weiterbildung der Erfindung mündet die Luftauslassöffnung des ersten Klimamoduls des Kraftfahrzeuges unmittelbar in den Fahrgastraum oder ist mittels zumindest einer Leitung mit dem Fahrgastraum verbunden. Diese Weiterbildung ermöglicht eine Umluftzirkulation, wobei die Umluft gekühlt werden kann.

Nach einer Weiterbildung der Erfindung bildet der Hohlkörper des Kraftfahrzeuges zusätzlich zumindest eine Leitung sowie zumindest einen Teil eines zweiten Klimamoduls, wobei die Leitung die Luftauslassöffnung des ersten Klimamoduls mit dem zweiten Klimamodul verbindet, so dass Luft aus dem ersten Klimamodul in das zweite Klimamodul strömen kann, wobei das zweite Klimamodul zumindest mit dem Fahrgastraum verbunden ist, so dass Luft aus dem zweiten Klimamodul in den Fahrgastraum strömen kann, und wobei das zweite Klimamodul optional zumindest ein Luftfördermittel aufweist. In der Leitung ist bevorzugt zumindest eine Öffnung vorgesehen, so dass Luft aus der Leitung in den Fahrgastraum strömen kann. Diese Weiterbildung ermöglicht eine Umluftzirkulation, wobei die Umluft gekühlt werden kann. Dadurch erlaubt die Weiterbildung eine besonders energieeffiziente Betriebsweise des Kraftfahrzeuges. Diese Weiterbildung ermöglicht eine vergleichsweise intensivere Kühlung der Luft, da die Luft durch ein erstes und ein zweites Klimamodul hindurchströmt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Schnittansicht durch ein teilweise dargestelltes Kraftfahrzeug mit einer Kühlanordnung gemäss einer ersten, erfindungsgemässen Ausführungsform umfassend ein Wasserkasten und ein Klimamodul;
- Fig. 2: eine schematische Schnittansicht durch eine Kühlanordnung gemäss einer zweiten, erfindungsgemässen Ausführungsform umfassend einen Wasserkasten;
- Fig. 3: eine schematische Schnittansicht durch ein Kraftfahrzeug mit einer Kühlanordnung gemäss einer dritten, erfindungsgemässen Ausführungsform umfassend ein erstes Klimamodul sowie ein zweites Klimamodul;
- Fig. 4: eine schematischen Schnittansicht durch ein Kraftfahrzeug mit einer Kühlanordnung gemäss einer vierten, erfindungsgemässen Ausführungsform umfassend ein Klimamodul; sowie
- Fig. 5: eine schematische Schnittansicht durch eine Kühlanordnung gemäss einer fünften, erfindungsgemässen Ausführungsform umfassend ein Klimamodul.

### BESCHREIBUNG BEVORZUGTER AUSFÜHRUNGSFORMEN

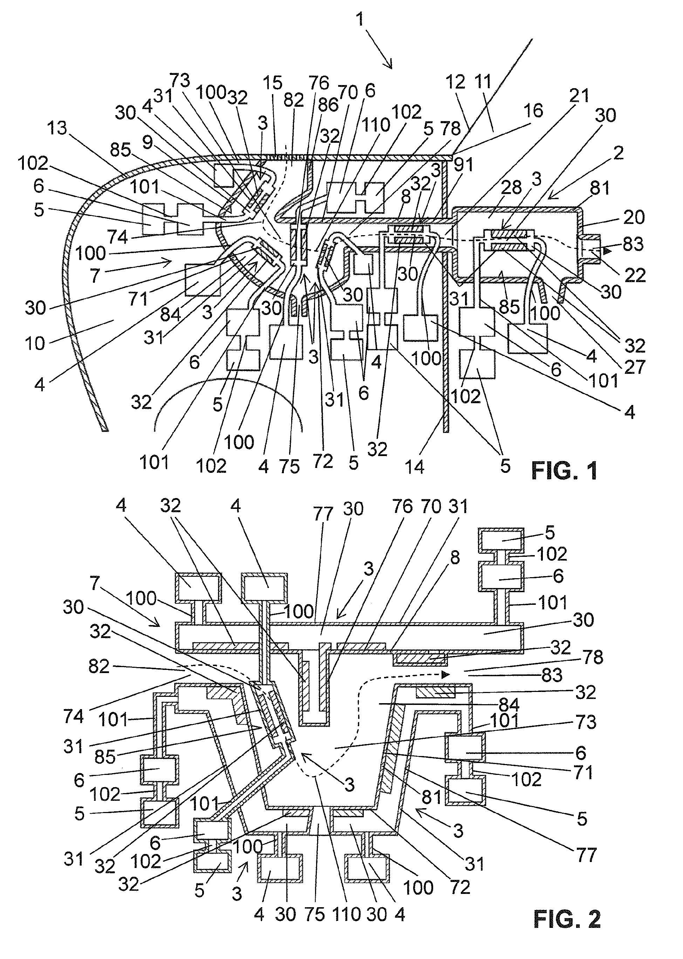

In der Figur 1 ist schematisch der Frontbereich eines Kraftfahrzeugs 1 dargestellt, in welchem eine erfindungsgemässe Kühlanordnung vorgesehen ist. Das Kraftfahrzeug 1 weist einen von einer Motorhaube 13 überdeckten Motorraum 10 auf, welcher mittels einer Stirnwand 14 von einem Fahrgastraum 11 abgetrennt ist.

Das Kraftfahrzeug 1 weist eine Kühlanordnung mit einer Leitstruktur 8 auf, welche einen Hohlkörper 81 mit einer Lufteinlassöffnung 82 sowie einer Luftauslassöffnung 83 bildet, wobei die Lufteinlassöffnung 82 sowie die Luftauslassöffnung 83 mittels eines Raumes 84 miteinander verbunden sind, welcher durch eine Innenfläche 85 begrenzt ist. Die Innenfläche 85 wird von einer Wandung 86 des Hohlkörpers 81 gebildet. Innerhalb der Motorhaube 13 ist eine Lufteinlassöffnung 15 ausgebildet welche mit der der unterhalb der Motorhaube 13 angeordneten Lufteinlassöffnung 82 des Hohlkörpers 81 verbunden ist, so dass durch die Lufteinlassöffnung 15 sowie den Hohlkörper 81 hindurch Frischluft von ausserhalb des Kraftfahrzeugs 1 in den Fahrgastraum 11 angesogen werden kann.

In alternativen Ausführungsformen kann die Lufteinlassöffnung 82 des Hohlkörpers 81 beispielsweise auch in einem Spalt zwischen der Windschutzscheibenunterkante 16 einer Frontwindschutzscheibe 12 des Kraftfahrzeuges 1 und der Motorhaube 13 und / oder in einem Durchbruch in der Motorhaube 13 angeordnet sein (nicht dargestellt). Grundsätzlich sind beliebige Anordnungen der Lufteinlassöffnung 82 des Hohlkörpers 81 im Kraftfahrzeug 1 möglich. Im Bereich der Lufteinlassöffnung 15 kann ein Gitter vorgesehen sein, um zu verhindern, dass unerwünschte, insbesondere im sogenannten Schwallwasser enthaltene Bestandteile, in die unterhalb der Lufteinlassöffnung 15 angeordnete Lufteinlassöffnung 82 des Hohlkörpers 81 eindringen. Insbesondere ein Eindringen von Schnee und Laub soll dadurch verhindert werden.

Der Hohlkörper 81 bzw. die Wandung 86 des Hohlkörpers 81 bildet bei der in Figur 1 dargestellten Ausführungsform einen Teil eines unterhalb der Lufteinlassöffnung 15 angeordneten Wasserkastens 7 mit einem von der Innenfläche 85 des Hohlkörpers 81 begrenzten Hohlraum 73, einer Lufteinlassöffnung 74, durch welche Luft in den Hohlraum 73 einströmen kann, einer Luftauslassöffnung 78, durch welche Luft aus dem Hohlraum 73 ausströmen kann, sowie einer Wasseraustrittsöffnung 75, welche geeignet ist, Wasser aus dem Hohlraum 73 abzuführen. Der Wasserkasten 7 ist nach oben hin von einer Deckenwandung 70, seitlich von einer im Wesentlichen umlaufenden Seitenwandung 71 sowie nach unten hin von einer Bodenwandung 72 begrenzt, wobei die Luftauslassöffnung 78 auf der der Lufteinlassöffnung 74 gegenüberliegenden, zur Stirnwand 14 hin gerichteten Seite im oberen Bereich des Wasserkasten 7 angeordnet ist. Die Bodenwandung 72 weist eine nach unten hin gewölbte Form auf. In ihrem untersten Punkt weist die Bodenwandung 72 zentral die Wasseraustrittsöffnung 75 auf, durch welche hindurch Wasser, das im Hohlraum 73 des Wasserkastens 7 von der angesaugten Frischluft ausgeschieden wurde, ablaufen kann. Der Wasserkasten 7 dient im Kraftfahrzeug 1 somit dazu, Wasser von Frischluft, welche von aussen her angesaugt wird, abzuscheiden. Gegenüberliegend zur Wasseraustrittsöffnung 75 ist an der Deckenwandung 70 ein Umlenkelement 76 angebracht, welches sich nach unten hin von der Deckenwandung 70 in senkrechter Richtung in den Hohlraum 73 hinein erstreckt. Das Umlenkelement 76, welches sich im Wesentlichen quer zur Hauptströmungsrichtung der durch den Hohlraum 73 strömenden Luft erstreckt, dient zur Verbesserung des Abscheidens von Wasser aus der durch den Hohlraum 73 des Wasserkastens 7 hindurchströmenden Frischluft. Das Umlenkelement 76 ist dazu bevorzugt derart ausgebildet und angeordnet, dass es von der hindurchströmenden Luft in vertikaler und/oder horizontaler Richtung umströmt wird. Im vorliegenden Ausführungsbeispiel gemäss Figur 1 bildet das Umlenkelement 76 gleichzeitig auch ein im Hohlraum 73 des Wasserkastens 7 angeordnetes Kühlelement 3 zum Kühlen der daran vorbeiströmenden Frischluft. Das Umlenkelement 76 bzw. das Kühlelement 3 bildet somit ein Teil des Wasserkastens 7.

Zusätzlich bildet der Hohlkörper 81 bzw. die Wandung 86 des Hohlkörpers 81 eine rohrförmige Leitung 9, welche wiederum die Lufteinlassöffnung 82 des Hohlkörpers 81 bildet sowie die Lufteinlassöffnung 82 des Hohlkörpers 81 mit der Lufteinlassöffnung 74 des Wasserkastens 7 verbindet, so dass über die Lufteinlassöffnung 82 Luft in den Wasserkasten 7 einströmen kann.

Des weiteren bildet der Hohlkörper 81 bzw. die Wandung 86 des Hohlkörpers 81 einen Teil eines Klimamoduls 2 mit einem von der durch den Hohlkörper 81 bzw. dessen Wandung 86 gebildeten Innenfläche 85 begrenzten Hohlraum 28, einer Lufteinlassöffnung 21, durch welche Luft in den Hohlraum 28 einströmen kann, sowie einer Luftauslassöffnung 22, durch welche Luft aus dem Hohlraum 28 in den Fahrgastraum 11 ausströmen kann. Wie in Figur 1 ersichtlich, entspricht die Luftauslassöffnung 22 des Klimamoduls 2 der Luftauslassöffnung 83 des Hohlkörpers 81.

Die Lufteinlassöffnung 21 des Klimamoduls 2 ist mittels einer durch den Hohlkörper 81 bzw. der Wandung 86 des Hohlkörpers 81 gebildeten rohrförmigen Leitung 91 mit der Luftauslassöffnung 78 des Wasserkastens 7 verbunden, so dass Luft aus dem Wasserkasten 7 in das Klimamodul 2 einströmen kann. Hierzu erstreckt sich die rohrförmigen Leitung 91 durch die Stirnwand 14 hindurch vom Motorraum 10 in den Fahrgastraum 11 hinein.

Üblicherweise ist das Klimamodul 2 im Fahrgastraum 11 des Kraftfahrzeuges 1 angeordnet, insbesondere in einem Raum zwischen dem Armaturenbrett und der Stirnwand 14. Das Klimamodul 2 weist in diesem Ausführungsbeispiel einen Verdampfer und/oder ein Heizelement auf, welche in der Fig. 1 jedoch beide nicht dargestellt sind. Das Klimamodul 2 weist zudem in diesem Ausführungsbeispiel ein Luftfördermittel in Form eines in der Figur 1 ebenfalls nicht dargestellten Ventilators auf, um das Ansaugen der Frischluft durch die Lufteinlassöffnung 15, die rohrförmige Leitung 9, den Wasserkasten 7 und die rohrförmige Leitung 91 hindurch in das Klimamodul 2 hinein zu bewirken. Der Verdampfer und/oder das Heizelement sowie das Luftfördermittel bilden somit einen Teil des Klimamoduls. Üblicherweise ist für diesen Zweck nur ein einziges Luftfördermittel vorhanden, es können aber selbstverständlich noch weitere Luftfördermittel vorgesehen sein, welche insbesondere auch im Bereich des Wasserkastens 7 und / oder der rohrförmigen Leitungen 9, 91 angeordnet sein können. Das Klimamodul 2 stellt ein Teil eines Klimageräts dar, welches in der Regel noch einen Kompressor sowie einen Verflüssiger aufweist, die aber üblicherweise im Motorraum 10 angeordnet sind.

Auf der der Lufteinlassöffnung 21 gegenüberliegenden Seite weist das Gehäuse 20 des Klimamoduls 2 die Luftauslassöffnung 22 auf, durch welchen hindurch die angesaugte Luft aus dem Klimamodul 2 hinaus in den Fahrgastraum 11 gelangt. Kondenswasser, welches im Inneren des Gehäuses 20, insbesondere im Bereich eines allfälligen Verdampfers, anfällt, kann durch einen Kondenswasserablauf 27 abgeschieden werden.

Im vorliegenden Ausführungsbeispiel gemäss Figur 1 weist das Kraftfahrzeug 1 eine erfindungsgemässe Kühlanordnung auf umfassend eine Vielzahl von Kühlelementen 3, welche im Hohlraum 73 des Wasserkastens 7, in den rohrförmigen Leitungen 9, 91 und im Hohlraum 28 des Klimamoduls 2 angeordnet sind. Die im Hohlraum 73 des Wasserkastens 7 angeordneten drei Kühlelemente 3 bilden somit einen Teil des Wasserkastens 7 und das im Hohlraum 28 des Klimamoduls 2 angeordnete Kühlelement 3 bildet somit einen Teil des Klimamoduls 2. Die Kühlelemente 3 weisen jeweils einen von einer Wandung 31 begrenzten Innenraum 30 auf. Die Wandung 31 kann, muss aber nicht, im Wesentlichen hohlzylindrisch ausgebildet sein. Im vorliegenden Ausführungsbeispiel gemäss Figur 1 ist das Kühlelement 3 jeweils derart angeordnet, dass die Wandung 31 an ihrer Aussenfläche vollständig von der angesaugten Luft umströmt wird. Die Wandung 31 bildet dadurch ein Wärmeübertragungselement, durch welches hindurch thermische Energie der umströmenden Luft in den Innenraum 30 übertragen wird.

Im Innenraum 30 ist an den Innenflächen der Wandungen 31 jeweils ein saugfähiges Material 32 angebracht. Bevorzugt ist dieses saugfähige Material 32 jeweils im Bereich eines Grossteils der Innenfläche der Wandung 31 vorgesehen. Das saugfähige Material 32 kann dazu insbesondere sogar selbst im Wesentlichen eine hohlzylindrische Form annehmen. Beim saugfähigen Material 32 kann es sich insbesondere um einen zum Beispiel aus Polyurethan hergestellten Filz, ein Vlies oder ein schwammartiges Material handeln. Dem Fachmann sind solche saugfähigen Materialien 32 bekannt.

An den Kühlelementen 3 ist jeweils über eine in den Innenraum 30 mündende Leitung 100 eine Vakuumvorrichtung 4 angeschlossen, welche zur Herstellung eines Vakuums im Innenraum 30 dient. Auf der gegenüberliegenden Seite des Kühlelements 3 mündet jeweils eine zweite Leitung 101 in den Innenraum 30, welche mit einer Flüssigkeitsfördereinrichtung 6 und einem Flüssigkeitsreservoir 5 verbunden ist. Die Flüssigkeitsfördereinrichtung 6 dient dazu, Flüssigkeit, bei welcher es sich insbesondere um Wasser handelt, über eine Leitung 102 aus dem Flüssigkeitsreservoir 5 in den Innenraum 30 zu transportieren, wo die Flüssigkeit vom saugfähigen Material 32 aufgenommen wird. Bei der Flüssigkeitsfördereinrichtung 6 kann es sich insbesondere um eine Pumpe handeln. Die Flüssigkeitsfördereinrichtung 6 kann jedoch auch in Form eines Dochtes, eines Vlieses oder eines schwammartigen Materials ausgebildet sein, um mittels Kapillarwirkung die Flüssigkeit aus dem Flüssigkeitsreservoir 5 in den Innenraum 30 hinein zu befördern.

Im vorliegenden Ausführungsbeispiel gemäss Figur 1 sind die Vakuumvorrichtungen 4, die Flüssigkeitsfördereinrichtungen 6 sowie die Flüssigkeitsreservoirs 5 ausserhalb des von der angesaugten Luft durchströmten Raums 84 des Hohlkörpers 81 bzw. ausserhalb der rohrförmigen Leitung 9, des Hohlraums 73 des Wasserkastens 7, der rohrförmigen Leitung 91 sowie des Hohlraumes 28 des Klimamoduls 2 angeordnet.

Anstelle von Wasser aus den Flüssigkeitsreservoirs 5 könnte auch Wasser verwendet werden, welches insbesondere in Form von Kondenswasser im Bereich des Verdampfers des Klimamoduls 2 anfällt. Der Kondenswasserablauf 27 des Klimamoduls 2 könnte hierzu direkt mit der Flüssigkeitsfördereinrichtung 6 verbunden sein, oder sogar via eine Verbindungsleitung direkt in den Innenraum 30 münden oder mit den Flüssigkeitsreservoirs 5 verbunden sein. Alternativ könnte auch Wasser verwendet werden, welches im Wasserkasten 7 aus der angesaugten Frischluft abgeschieden und durch die Wasseraustrittsöffnung 75 aus dem Wasserkasten 7 ausgeschieden wird. Hierzu könnte eine Leitung vorgesehen sein, welche die Wasseraustrittsöffnung 75 mit einem oder mehreren der Flüssigkeitsreservoirs 5 verbindet.

Die Vakuumvorrichtung 4 kann insbesondere als Vakuumpumpe ausgebildet sein. Üblicherweise weist das durch das Kühlelement 3, die Vakuumvorrichtung 4, das Flüssigkeitsreservoir 5 und die Flüssigkeitsfördereinrichtung 6 gebildete Kühlaggregat im Bereich der Vakuumvorrichtung 4 einen Luftauslass auf, um im Innenraum 30 eines Kühlelementes 3 enstehenden Dampf abzuführen.

Erfindungsgemäss wird also im Innenraum 30 der Kühlelemente 3 mittels der Vakuumvorrichtung 4 jeweils ein Vakuum, d.h. ein Unterdruck generiert. Bei einem Absenken des Druckes im Innenraum 30 des Kühlelementes 3 tritt eine zunehmend stärker werdende Verdunstung der im saugfähigen Material 32 enthaltenen Flüssigkeit auf. Dies bewirkt eine Kühlung der Flüssigkeit durch Verdunstung, da sich von der Flüssigkeit Moleküle in die Dampfphase lösen, welche im Vergleich zu den übrigen in der Flüssigkeit enthaltenen Molekülen eine überdurchschnittliche kinetische Energie aufweisen, und sich dadurch die durchschnittliche, in der Flüssigkeit enthaltene kinetische Energie verringert. Dieser Effekt tritt in einer noch wesentlich verstärkten Weise auf, wenn der Druck im Innenraum 30 des Kühlelementes 3 zumindest soweit abgesenkt wird, dass die Flüssigkeit siedet und somit verdampft. Wenn es sich bei der im saugfähigen Material 32 aufgenommenen Flüssigkeit beispielsweise um 20°C warmes Wasser handelt, wäre dies bei einem Restdruck von etwa 23 hPa der Fall. Im Vergleich zur Verdunstung löst sich beim Verdampfen eine weitaus grössere Anzahl von Molekülen aus der Flüssigkeit. Wird ein Vakuum hergestellt, welches dem Dampfdruck bei der zunächst vorherrschenden Temperatur der Flüssigkeit entspricht, stellt sich ein Gleichgewicht zwischen Dampfphase und Flüssigphase ein. Wird der Druck weiter abgesenkt bzw. das Vakuum weiter verstärkt, wird ein neues Gleichgewicht unter Absenkung der Temperatur der Flüssigkeit dadurch erreicht, dass weitere Flüssigkeit verdampft. Somit wird bevorzugt ein Vakuum hergestellt, welches stärker ist als das Vakuum, welches dem Dampfdruck der Flüssigkeit bei der zunächst vorherrschenden Temperatur der Flüssigkeit entspricht. Dadurch kann die Temperatur der Flüssigkeit sogar soweit abgesenkt werden, dass die Flüssigkeit gefriert. Bei gefrorener Flüssigkeit herrscht ebenso ein Gleichgewicht zwischen Dampfphase und gefrorener Flüssigkeit, so dass bei weiterer Senkung des Drucks eine weitere Absenkung der Temperatur der gefrorenen Flüssigkeit durch Sublimation unter den Gefrierpunkt der Flüssigkeit erzielt werden kann. Die Vakuumvorrichtung kann kontinuierlich oder diskontinuierlich betrieben werden.

Wenn die Kühlelemente 3 jeweils während dieser Druckverminderung im Innenraum 30 von der durch den Hohlkörper 81 hindurchströmenden Luft umströmt werden, wird thermische Energie vom Luftstrom 110 durch die Wandung 31 hindurch in den Innenraum 30 übertragen, sobald die Temperatur der im Innenraum 30 vorhandenen Flüssigkeit unterhalb derjenigen des Luftstroms 110 gesunken ist. Dem Luftstrom 110 wird somit von den Kühlanordnungen thermische Energie entzogen.

Der im Innenraum 30 der Kühlelemente 3 jeweils entstehende Dampf, insbesondere Wasserdampf, falls die Flüssigkeit Wasser ist, wird mittels der Vakuumvorrichtung 4 nach aussen hin abgeführt. Mittels der Flüssigkeitsfördereinrichtung 6 wird dem im Innenraum 30 vorhandenen saugfähigen Material 32 gleichzeitig bevorzugt konstant neue Flüssigkeit zugeführt. Dadurch kann sichergestellt werden, dass im Innenraum 30 ständig Flüssigkeit vorhanden ist, welche zum Verdampfen vom flüssigen in den gasförmigen Zustand geeignet ist.

Die zahlreichen Kühlelemente 3, welche in der rohrförmigen Leitung 9, im Hohlraum 73 des Wasserkastens 7, in der rohrförmigen Leitung 91 sowie im Hohlraum 28 des Klimamoduls 2 angeordnet sind, bewirken somit eine äusserst effektive Kühlung der in den Fahrgastraum 11 einzuleitenden Luft. Diese durch die Kühlelemente 3 bewirkte Kühlung stellt dabei insbesondere eine Vorkühlung der angesaugten Luft vor dem Erreichen des Verdampfers des Klimamoduls 2 dar.

Dadurch, dass die Flüssigkeit, welche jeweils im saugfähigen Material 32 der Kühlelemente 3 aufgenommen ist, aufgrund der Druckverringerung sogar gefrieren kann, wird aufgrund des Vorhandenseins von Eis eine Kühlwirkung weiterhin auch dann über eine gewisse Zeit aufrechterhalten, wenn die Vakuumvorrichtungen 4 nicht in Betrieb sind. Die Kühlelemente bilden dann einen Latentwärmespeicher, so dass eine wirksame Kühlung der angesaugten Luft mittels dieser Kühlelemente 3 insbesondere dann umgehend wieder zur Verfügung steht, wenn die Vakuumvorrichtungen 4 nach einem kurzen Unterbruch wieder in Betrieb genommen werden. Der Motor des Kraftfahrzeugs 1 kann also gestoppt werden, so dass auch die Vakuumvorrichtungen 4 und das Klimagerät bzw. insbesondere das Klimamodul 2 ausgeschalten sind, und die Kühlung der angesaugten Luft nach Wiederinbetriebnahme unmittelbar gewährleistet ist. Vorteilhaft bleibt das in der Regel im Klimamodul 2 angeordnete Luftfördermittel bei einem Motorstopp zumindest für eine gewisse Zeit noch in Betrieb, so dass weiterhin Luft durch die Lufteinlassöffnung 15 angesaugt und dem Fahrgastraum 11 zugeführt wird. Mittels eines geringen Energieaufwandes kann dadurch die Kühlung auch beim Stillstand des Kraftfahrzeugs 1 aufrechterhalten werden.

In den Figuren 2 bis 5 sind jeweils schematisch weitere erfindungsgemässe Ausführungsbeispiele gezeigt. Funktionell gleich oder ähnlich wirkende Elemente sind in diesen Figuren jeweils mit denselben Bezugszeichen wie in der Figur 1 gekennzeichnet.

In der Figur 2 ist eine Kühlanordnung mit einer Leitstruktur 8 dargestellt, welche einen Hohlkörper 81 mit einer Lufteinlassöffnung 82 und einer Luftauslassöffnung 83 bildet, wobei die Lufteinlassöffnung 82 und die Luftauslassöffnung 83 mittels eines Raumes 84 miteinander verbunden sind, welcher durch eine Innenfläche 85 begrenzt ist. Der Hohlkörper 81 bildet bei der in Figur 2 dargestellten Ausführungsform einen Teil eines Wasserkastens 7 mit einem von der Innenfläche 85 des Hohlkörpers 81 begrenzten Hohlraum 73, einer Lufteinlassöffnung 74, durch welche Luft in den Hohlraum 73 einströmen kann, einer Luftauslassöffnung 78, durch welche Luft aus dem Hohlraum 73 ausströmen kann, sowie einer Wasseraustrittsöffnung 75, welche geeignet ist, Wasser aus dem Hohlraum 73 abzuführen. Da bei der Ausführungsform gemäss Figur 2 der Hohlkörper 81 ausschliesslich einen Teil eines Wasserkastens 7 bildet, entspricht der Raum 84 des Hohlkörpers 81 dem Hohlraum 73 des Wasserkastens 7, die Lufteinlassöffnung 82 des Hohlkörpers 81 der Lufteinlassöffnung 74 des Wasserkastens 7 sowie die Luftauslassöffnung 83 des Hohlkörpers 81 der Luftauslassöffnung 78 des Wasserkastens 7.

Der Hohlraum 73 des Wasserkastens 7 ist nach oben hin von einer im Wesentlichen ebenen Deckenwandung 70 begrenzt. Von der Deckenwandung 70 erstreckt sich im Wesentlichen umlaufend eine Seitenwandung 71 nach unten hin. Die Seitenwandung 71 verjüngt sich dabei nach unten hin konisch. Am unteren Ende der Seitenwandung 71 weist der Wasserkasten 7 eine im Wesentlichen ebene Bodenwandung 72 auf, welche den Hohlraum 73 nach unten hin begrenzt. Die Bodenwandung 72 weist eine zentral angeordnete Wasseraustrittsöffnung 75 auf. Ebenso wie der in der Figur 1 gezeigte Wasserkasten 7 weist auch der in der Figur 2 dargestellte Wasserkasten 7 in einem oberen Bereich unmittelbar unterhalb der Deckenwandung 70 auf einander im Wesentlichen diametral gegenüberliegenden Seiten die Lufteinlassöffnung 74 sowie die Luftauslassöffnung 78 auf.

Die Deckenwandung 70, die Seitenwandung 71 sowie die Bodenwandung 72 des Wasserkastens 7 sind in dieser Ausführungsform gemäss Figur 2 jeweils doppelwandig ausgebildet. Es ist eine Aussenwandung 77 vorgesehen, welche zusammen mit der Deckenwandung 70, der Seitenwandung 71 und der Bodenwandung 72 einen Innenraum 30 begrenzt, in welchem an einer Vielzahl von Stellen ein saugfähiges Material 32 angeordnet ist. Bei der Ausführungsform gemäss Figur 2 bildet somit ein Teil der Wandung 31 der Kühlelemente 3 die den Hohlraum 73 des Wasserkastens 7 begrenzende Innenfläche 85. Diese Kühlelemente 3 bilden somit einen Teil des Wasserkastens 7. Der Innenraum 30 ist in mehrere Kompartimente unterteilt, welche jeweils via entsprechende Leitungen 100 mit einer oder mehreren Vakuumvorrichtungen 4 verbunden sind, die zur Herstellung eines derartigen Vakuums im Innenraum 30 dienen, dass die im saugfähigen Material 32 aufgenommene Flüssigkeit siedet und / oder sublimiert. Weitere Leitungen 101 sind vorgesehen, um den Innenraum 30 mit Flüssigkeitsfördereinrichtungen 6 zu verbinden, welche ihrerseits via eine Leitung 102 jeweils mit einem Flüssigkeitsreservoir 5 verbunden sind. Der in der Figur 2 gezeigte Wasserkasten 7 dient somit neben dem Abscheiden von Wasser aus der angesaugten Luft auch zum Kühlen der den Hohlraum 73 durchströmenden Luft.

Auch der in der Figur 2 gezeigte Wasserkasten 7 weist ein von der Deckenwandung 70 nach unten in den Hohlraum 73 ragendes Umlenkelement 76 auf. Das Umlenkelement 76 ist hier hohl ausgebildet und weist eine einen Hohlraum begrenzende Wandung auf. Dieser Hohlraum des Umlenkelements 76 stellt einen Teil des Innenraums 30 dar, welcher sich auch unmittelbar oberhalb der Deckenwandung 70 erstreckt und zu einem Kühlelement 3 gehört.

Die Wandung 31 der Kühlelemente 3 wird im vorliegenden Ausführungsbeispiel gemäss Figur 2 jeweils durch die Deckenwandung 70, die Seitenwandung 71, die Bodenwandung 72, die Wandung des Umlenkelements 76 bzw. die Aussenwandung 77 gebildet. Dabei bilden die Deckenwandung 70, die Seitenwandung 71, die Bodenwandung 72 und die Wandung des Umlenkelements 76 jeweils ein Wärmeübertragungselement, um thermische Energie des im Hohlraum 73 vorhandenen Luftstroms 110 in den Innenraum 30 zu übertragen. Dementsprechend ist das saugfähige Material 32 bei dem in der Figur 2 gezeigten Wasserkasten 7 jeweils bevorzugt an den an den Hohlraum 73 angrenzenden Wandungen angeordnet, also an der Deckenwandung 70, der Seitenwandung 71, der Bodenwandung 72 und/oder der Wandung des Umlenkelements 76. Derartige, wie im Zusammenhang mit Figur 2 beschriebenen Kühlelemente 3, welche einen Teil der Innenfläche 85 des Hohlkörpers 81 bzw. des Wasserkastens 7 bilden, können selbstverständlich beim Hohlkörper 81 gemäss Figur 1 auch vorgesehen sein. Das gemäss Figur 2 im Hohlraum 73 des Wasserkastens 7 angeordnete Kühlelement 3 hat eine Doppelfunktion, nämlich der Kühlung der durch den Hohlraum 73 des Wasserkastens 7 hindurchströmenden Luft sowie die Verbesserung der Abscheidung von Wasser aus der durch den Hohlraum 73 des Wasserkastens 7 hindurchströmenden Luft.

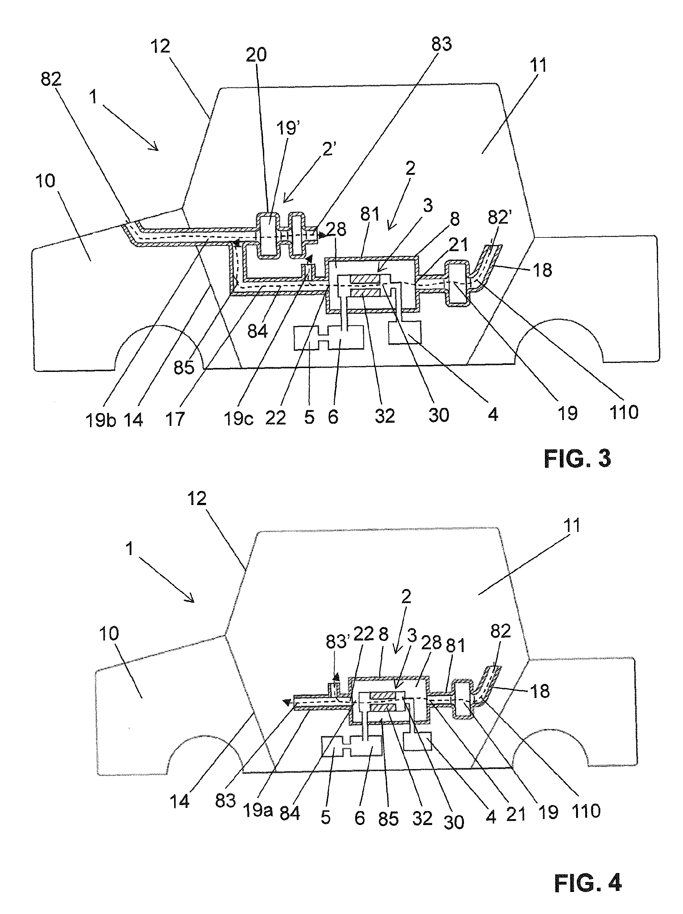

In der Figur 3 ist eine Kühlanordnung mit einer Leitstruktur 8 dargestellt, welche einen Hohlkörper 81 mit einer ersten Lufteinlassöffnung 82', einer zweiten Lufteinlassöffnung 82 sowie einer Luftauslassöffnung 83 bildet, wobei die Lufteinlassöffnungen 82, 82' und die Luftauslassöffnung 83 mittels eines Raumes 84 miteinander verbunden sind, welcher durch eine Innenfläche 85 begrenzt ist. Der Hohlkörper 81 bildet bei der Ausführungsform gemäss Figur 3 folgende Strukturen:
- Einen Teil eines ersten Klimamoduls 2 mit einem von der Innenfläche 85 des Hohlkörpers 81 begrenzten Hohlraum 28, einer Lufteinlassöffnung 21, einer Luftauslassöffnung 22;
- Eine erste Ansaugleitung 18, welche die erste Lufteinlassöffnung 82' des Hohlkörpers 81 bildet und den Fahrgastraum 11 mit der Lufteinlassöffnung 21 des ersten Klimamoduls 2 verbindet, so dass Luft aus einem hinteren Bereich des Fahrgastraums 11 in den Hohlraum 28 des ersten Klimamoduls 2 einströmen kann;
- Einen Teil eines zweiten Klimamoduls 2', welches die Luftauslassöffnung 83 des Hohlkörpers 81 bildet;
- Eine Frischluftzuführleitung 19b, welche die zweite Lufteinlassöffnung 82 des Hohlkörpers 81 bildet und mit dem zweiten Klimamodul 2' verbunden ist, so dass Frischluft ausserhalb des Kraftfahrzeuges 1 in das zweite Klimamodul 2' einströmen kann;
- Eine zweite Ansaugleitung 17, welche in die Frischluftzuführleitung 19b mündet und so die Luftauslassöffnung 22 des ersten Klimamoduls 2 mit der Frischluftzuführleitung 19b verbindet, so dass Luft aus dem Hohlraum 28 des ersten Klimamoduls 2 in die Frischluftzuführleitung 19b strömen kann, wobei in der zweiten Ansaugleitung 17 eine Auslassöffnung 19c angeordnet ist, welche in den Fahrgastraum 11 mündet.

Im Hohlraum 28 des ersten Klimamoduls 2 ist ein Kühlelement 3 angeordnet. Das Kühlelement 3, welches einen Teil des Klimamoduls 2 bildet, weist einen Innenraum 30 und darin angeordnetes saugfähiges Material 32 auf. In einem aufgeweiteten Bereich weist die erste Ansaugleitung 18 ein nicht dargestellter Ventilator 19 auf, um Luft in das erste Klimamodul 2 hineinzubefördern. Um eine Flüssigkeit in den Innenraum 30 einzuführen und ein Sieden und / oder Sublimieren dieser Flüssigkeit zu Kühlzwecken zu ermöglichen, ist am Kühlelement 3, analog zu den in den Figuren 1 und 2 gezeigten Ausführungsformen, ein Flüssigkeitsreservoir 5, eine Flüssigkeitsfördervorrichtung 6 und eine Vakuumvorrichtung 4 angeschlossen. Die beschriebene Ausführungsform gemäss Figur 3 ermöglicht eine Umluftzirkulation, indem an der Lufteinlassöffnung 82' Luft aus dem Fahrgastraum 11 angesaugt und in das erste Klimamodul 2 hineintransport, und dort, falls gewünscht, mittels des Kühlementes 3 gekühlt, und über die Luftauslassöffnung 83 des zweiten Klimamoduls 2' wieder in den Fahrgastraum 11 rückgeführt wird. Die Umluftzirkulation wird durch den im aufgeweiteten Bereich der ersten Ansaugleitung 18 angeordneten Ventilator 19 sowie den im Gehäuse 20 des zweiten Klimamoduls 2' angeordneten nicht dargestellten Ventilator 19', welcher einen Teil des zweiten Klimamoduls 2' bildet, bewerkstelligt. Anstatt die aus dem ersten Klimamodul 2 ausströmende Luft über die Luftauslassöffnung 83 wieder in den Fahrgastraum 11 rückzuführen, ist es alternativ möglich, die Luft über die Luftauslassöffnung 19c in der zweiten Ansaugleitung 17 in den Fahrgastraum 11 wieder rückzuführen.

In der Figur 4 ist eine Kühlanordnung mit einer Leitstruktur 8 dargestellt, welche einen Hohlkörper 81 mit einer Lufteinlassöffnung 82, einer ersten Luftauslassöffnung 83 sowie einer zweiten Luftauslassöffnung 83' bildet, wobei die Lufteinlassöffnung 82 und die Luftauslassöffnungen 83, 83' mittels eines Raumes 84 miteinander verbunden sind, welcher durch eine Innenfläche 85 begrenzt ist. Der Hohlkörper 81 bildet bei der Ausführungsform gemäss Figur 4 folgende Strukturen:
- Einen Teil eines Klimamoduls 2 mit einem von der Innenfläche 85 des Hohlkörpers 81 begrenzten Hohlraum 28, einer Lufteinlassöffnung 21 sowie einer Luftauslassöffnung 22;
- Eine erste Ansaugleitung 18, welche die Lufteinlassöffnung 82 des Hohlkörpers 81 bildet und den Fahrgastraum 11 mit der Lufteinlassöffnung 21 des Klimamoduls 2 verbindet, so dass Luft aus einem hinteren Bereich des Fahrgastraums 11 in den Hohlraum 28 des ersten Klimamoduls 2 einströmen kann;
- Eine Auslassleitung 19a, welche mit der Luftauslassöffnung 22 verbunden ist und die erste Luftauslassöffnung 83 sowie die zweite Luftauslassöffnung 83' des Hohlkörpers 83 bildet, welche beide in den Fahrgastraum 11 münden.

Im Hohlraum 28 des Klimamoduls 2 ist ein Kühlelement 3 angeordnet, welches einen Teil des Klimamoduls 2 bildet. Das Kühlelement 3 weist einen Innenraum 30 und ein darin angeordnetes saugfähiges Material 32 auf. In einem aufgeweiteten Bereich weist die Ansaugleitung 18 einen nicht dargestellten Ventilator 19 auf, um Luft in das Klimamodul 2 hineinzubefördern. Um eine Flüssigkeit in den Innenraum 30 einzuführen und ein Sieden und / oder Sublimieren dieser Flüssigkeit zu Kühlzwecken zu ermöglichen, ist am Kühlelement 3, analog zu den in den Figuren 1, 2 und 3 gezeigten Ausführungsformen, ein Flüssigkeitsreservoir 5, eine Flüssigkeitsfördervorrichtung 6 und eine Vakuumvorrichtung 4 angeschlossen. Die beschriebene Ausführungsform gemäss Figur 4 ermöglicht ebenfalls eine Umluftzirkulation, indem an der Lufteinlassöffnung 82 Luft aus dem Fahrgastraum 11 angesaugt und in das Klimamodul 2 hineintransportiert, und dort, falls gewünscht, mittels des Kühlementes 3 gekühlt, und über die Luftauslassöffnung 83 und / oder die Luftauslassöffnung 83' wieder in den Fahrgastraum 11 rückgeführt wird. Die Umluftzirkulation wird durch den im aufgeweiteten Bereich der Ansaugleitung 18 angeordneten, nicht dargestellten Ventilator 19 bewerkstelligt.

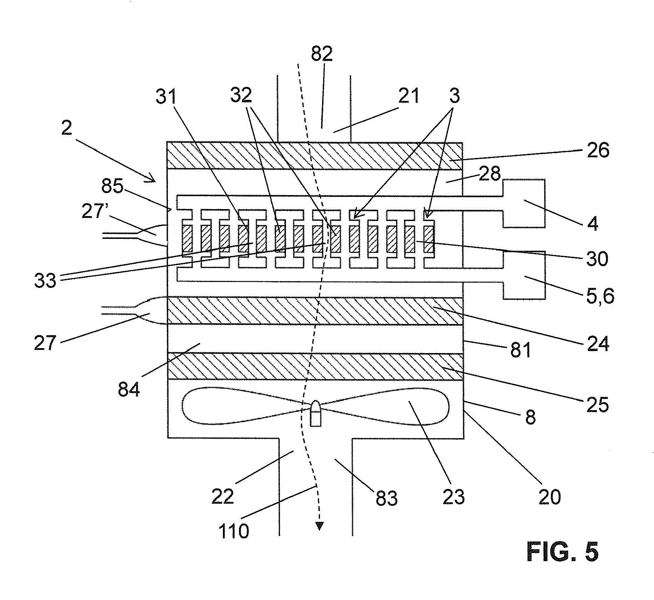

In der Figur 5 ist eine Kühlanordnung mit einer Leitstruktur 8 dargestellt, welche einen Hohlkörper 81 mit einer Lufteinlassöffnung 82 sowie einer Luftauslassöffnung 83 bildet, wobei die Lufteinlassöffnung 82 und die Luftauslassöffnung 83 mittels eines Raumes 84 miteinander verbunden sind, welcher durch eine Innenfläche 85 begrenzt ist. Der Hohlkörper 81 bildet bei der in Figur 5 dargestellten Ausführungsform einen Teil eines Klimamoduls 2 mit einem von der Innenfläche 85 des Hohlkörpers 81 begrenzten Hohlraum 28, zumindest einer Lufteinlassöffnung 21, durch welche hindurch Luft in den Hohlraum 28 einströmen kann sowie zumindest einer Luftauslassöffnung 22, durch welche hindurch Luft aus dem Hohlraum 28 ausströmen kann. Da bei der Ausführungsform gemäss Figur 5 der Hohlkörper 81 ausschliesslich einen Teil eines Klimamoduls 2 bildet, entspricht der Raum 84 des Hohlkörpers 81 dem Hohlraum 28 des Klimamoduls 2, die Lufteinlassöffnung 82 des Hohlkörpers 81 der Lufteinlassöffnung 21 des Klimamoduls 2 sowie die Luftauslassöffnung 83 des Hohlkörpers 81 der Luftauslassöffnung 22 des Klimamoduls 2.

Im Gehäuse 20 des Klimamoduls 2 sind eine Vielzahl von sich parallel zueinander erstreckenden Kühlelementen 3 vorgesehen, welche einen Teil des Klimamoduls 2 bilden. Die verschiedenen Kühlelemente 3 weisen einen gemeinsam verbundenen Innenraum 30 auf. Zwischen den Kühlelementen 3 sind eine Vielzahl von Durchtrittskanälen 33 vorhanden, welche ein Umströmen der Kühlelemente 3 von der in das Klimamodul 2 einströmenden Luft ermöglichen. Dadurch, dass eine Vielzahl von sich zueinander parallel erstreckenden Kühlelementen 3 mit dazwischen angeordneten Durchtrittskanälen 33 für die zu kühlende Luft vorhanden ist, erhöht sich die für den Wärmeaustausch wirksame Oberfläche beträchtlich. Zur Kühlung der das Gehäuse 20 durchströmenden Luft ist eine Vakuumvorrichtung 4 vorhanden, um im Innenraum 30 die Flüssigkeit zum Sieden und /oder Sublimieren zu bringen, welche via eine Flüssigkeitsfördereinrichtung 6 aus einem Flüssigkeitsreservoir 5 dem Innenraum 30 zugeführt wird. Zur Aufnahme der Flüssigkeit ist in den Kühlelementen 3 jeweils ein saugfähiges Material 32 angebracht.

Das in der Figur 5 gezeigte Klimamodul 2 weist im Bereich der Lufteinlassöffnung 21 einen Filter 26 auf, welcher dazu dient, in der einströmenden Luft enthaltene Staubpartikel etc. zurückzuhalten. Ein Ventilator 23 dient als Luftfördermittel zum Ansaugen von Frisch- und/oder Umluft. Die angesaugte Luft kann mittels eines Verdampfers 24 gekühlt oder mittels einer ebenfalls hinlänglich bekannten Heizung 25 erwärmt werden. Via den Kondenswasserablauf 27 kann im Verdampfer 24 anfallendes Kondenswasser abgeführt und vorteilhaft dem Flüssigkeitsreservoir 5 zugeführt werden. Via den Kondenswasserablauf 27' kann am Kühlelement 3 anfallendes Kondenswasser abgeführt und vorteilhaft dem Flüssigkeitsreservoir 5 zugeführt werden. Der Filter 26, der Ventilator 23, der Verdampfer 24 sowie die Heizung 25 bilden einen Teil des Klimamoduls 2.

Selbstverständlich ist die hier beschriebene Erfindung nicht auf die erwähnten Ausführungsformen beschränkt und eine Vielzahl von Abwandlungen ist möglich. So ist zum Beispiel das Vorsehen eines saugfähigen Materials im Innenraum eines Kühlelements zwar vorteilhaft, aber nicht zwingend notwendig. Anstelle von Wasser kann selbstverständlich auch eine beliebige andere Flüssigkeit in den Kühlelementen 3 vorgesehen sein, welche von der Flüssigkeitsfördereinrichtung 6 dem im Innenraum 30 angeordneten saugfähigen Material 32 zugeführt wird.

**BEZUGSZEICHENLISTE**

| | | | |
|---|---|---|---|
| 1 | Kraftfahrzeug | 14 | Stirnwand |
| 10 | Motorraum | 15 | Lufteinlassöffnung |
| 11 | Fahrgastraum | 16 | Windschutzscheibenunterkante |
| 12 | Frontwindschutzscheibe | | |
| 13 | Motorhaube | 17 | Zweite Ansaugleitung |
| 18 | Erste Ansaugleitung | 7 | Wasserkasten |
| 19 | Ventilator | 70 | Deckenwandung |
| 19' | Ventilator | 71 | Seitenwandung |
| 19a | Auslassleitung | 72 | Bodenwandung |
| 19b | Frischluftzufuhrleitung | 73 | Hohlraum |
| 19c | Auslassöffnung | 74 | Lufteinlassöffnung |
| | | 75 | Wasseraustrittsöffnung |
| 2 | Klimamodul | 76 | Umlenkelement |
| 2' | Klimamodul | 77 | Aussenwandung |
| 20 | Gehäuse | 78 | Luftauslassöffnung |
| 21 | Lufteinlassöffnung | | |
| 22 | Luftauslassöffnung | 8 | Leitstruktur |
| 23 | Ventilator | 81 | Hohlkörper |
| 24 | Verdampfer | 82 | Lufteinlassöffnung |
| 25 | Heizung | 82' | Lufteinlassöffnung |
| 26 | Filter | 83 | Luftauslassöffnung |
| 27 | Kondenswasserablauf | 83' | Luftauslassöffnung |
| 27' | Kondenswasserablauf | 84 | Raum |
| 28 | Hohlraum | 85 | Innenfläche |
| | | 86 | Wandung |
| 3 | Kühlelement | | |
| 30 | Innenraum | 9 | Rohrförmige Leitung |
| 31 | Wandung | 91 | Rohrförmige Leitung |
| 32 | Saugfähiges Material | | |
| 33 | Durchtrittskanäle | 100 | Leitung |
| | | 101 | Leitung |
| 4 | Vakuumvorrichtung | 102 | Leitung |
| 5 | Flüssigkeitsreservoir | | |
| 6 | Flüssigkeitsfördereinrichtung | 110 | Luftstrom |

## Patentansprüche

1. Verfahren zur Kühlung eines in einen Fahrgastraum (11) eines Kraftfahrzeugs (1) einzuleitenden Luftstroms (110) mittels zumindest einem Kühlelement (3), welches einen von einer Wandung (31) begrenzten Innenraum (30) aufweist, wobei zumindest ein Teil des Kühlelements (3) als Wärmeübertragungselement (31, 70, 71, 72) ausgebildet ist, um thermische Energie von ausserhalb des Kühlelements (3) in den Innenraum (30) zu übertragen, wobei das Verfahren die folgenden Schritte aufweist:
- Hinleiten des Luftstroms (110) zum Wärmeübertragungselement (31, 70, 71, 72),
- Zuführen einer Flüssigkeit in den Innenraum (30) mittels zumindest einer Flüssigkeitsfördereinrichtung (6),
- Herstellen zumindest eines derartigen Vakuums im Innenraum (30) mittels zumindest einer Vakuumvorrichtung (4), dass die im Innenraum (30) enthaltene Flüssigkeit siedet und/oder sublimiert.

2. Verfahren nach Anspruch 1, wobei es sich bei der Flüssigkeit um Wasser handelt, und wobei im Innenraum (30) des Kühlelements (3) ein derartiges Vakuum hergestellt wird, dass das Wasser im Innenraum (30) bei weniger als 30°C, insbesondere bei weniger als 10°C siedet.

3. Verfahren nach Anspruch 1 oder 2, wobei mittels der Vakuumvorrichtung (4) der im Innenraum (30) des Kühlelements (3) vorliegende Druck soweit gesenkt wird, dass die im Innenraum (30) enthaltene Flüssigkeit gefriert.

4. Verfahren nach einem der vorhergehenden Ansprüche, wobei das Kühlelement (3) ein saugfähiges Material (32) aufweist, welches im Innenraum (30) angeordnet ist und zur Aufnahme der Flüssigkeit dient.

5. Verfahren nach Anspruch 4, wobei es sich beim saugfähigen Material (32) um ein filzartiges, ein vliesartiges oder ein schwammartiges Material handelt.

6. Verfahren nach einem der vorhergehenden Ansprüche, wobei die Stärke des Vakuums in Abhängigkeit der Temperatur des in den Fahrgastraum (11) einzuleitenden Luftstroms (110) und/oder einer im Fahrgastraum (11) vorliegenden Lufttemperatur und/oder einer ausserhalb des Kraftfahrzeugs (1) vorliegenden Lufttemperatur geregelt wird.

7. Kühlanordnung für ein Kraftfahrzeug (1) mit einem Fahrgastraum (11), zur Kühlung eines in den Fahrgastraum (11) einzuleitenden Luftstroms (110), insbesondere für die Durchführung des Verfahrens gemäss einem der Ansprüche 1 bis 6, aufweisend
zumindest ein Kühlelement (3) mit einem von einer Wandung (31) begrenzten Innenraum (30), wobei zumindest ein Teil des Kühlelements (3) als Wärmeübertragungselement (31, 70, 71, 72) ausgebildet ist, um thermische Energie von ausserhalb des Kühlelements (3) in den Innenraum (30) zu übertragen,
eine Leitstruktur (2, 2', 7, 8, 9, 17, 18, 19a, 19b, 20, 31, 70, 71, 72, 74, 91), welche dazu geeignet ist, den einzuleitenden Luftstrom (110), insbesondere gezielt, zum Wärmeübertragungselement (31, 70, 71, 72) hinzuleiten,
zumindest eine Flüssigkeitsfördereinrichtung (6) zum Zuführen einer Flüssigkeit in den Innenraum (30), sowie
zumindest eine Vakuumvorrichtung (4) zum Herstellen zumindest eines derartigen Vakuums im Innenraum (30), dass die im Innenraum (30) enthaltene Flüssigkeit siedet und/oder sublimiert.

8. Kühlanordnung nach Anspruch 7, wobei zumindest ein Teil der den Innenraum (30) begrenzenden Wandung (31), bevorzugt zumindest ein Grossteil der Wandung (31), und besonders bevorzugt im Wesentlichen die gesamte Wandung (31), das Wärmeübertragungselement (31, 70, 71, 72) bildet.

9. Kühlanordnung nach Anspruch 7 oder 8, wobei die Leitstruktur (8) zumindest einen Hohlkörper (81) bildet, welcher eine Innenfläche (85), zumindest eine Lufteinlassöffnung (82, 82') und zumindest eine Luftauslassöffnung (83, 83') aufweist, und welcher einen von der Innenfläche (85) begrenzten Raum (84) aufweist, der die Lufteinlassöffnung (82, 82') und die Luftauslassöffnung (83, 83') miteinander verbindet.

10. Kühlanordnung nach Anspruch 9, wobei zumindest ein Teil der Wandung (31), insbesondere zumindest ein Grossteil der Wandung (31), welche den Innenraum (30) des Kühlelements (3) begrenzt, zumindest teilweise, die den Raum (84) des Hohlkörpers (81) begrenzende Innenfläche (85), bevorzugt im Wesentlichen die gesamte den Raum (84) des Hohlkörpers (81) begrenzende Innenfläche (85), bildet.

11. Kühlanordnung nach Anspruch 9 oder 10, wobei zumindest ein Kühlelement (3) zumindest teilweise, bevorzugt vollständig, im Raum (84) des Hohlkörpers (81) angeordnet ist.

12. Kühlanordnung nach einem der Ansprüche 9 bis 11, wobei der Hohlkörper (81) zumindest einen Teil eines Wasserkastens (7) bildet mit
einem von der Innenfläche (85) des Hohlkörpers (81) begrenzten Hohlraum (73),
zumindest einer Lufteinlassöffnung (74), durch welche hindurch Luft in den Hohlraum (73) einströmen kann,
zumindest einer Luftauslassöffnung (78), durch welche hindurch Luft aus dem Hohlraum (73) ausströmen kann, sowie
zumindest einer Wasseraustrittsöffnung (75), welche zum Abführen von Wasser aus dem Hohlraum (73) geeignet ist.

13. Kühlanordnung nach Anspruch 12, wobei der Wasserkasten (7) ein im Hohlraum (73) angeordnetes Umlenkelement (76) aufweist, welches zum Abscheiden von Wasser aus der den Hohlraum (73) durchströmenden Luft dient, und wobei das Umlenkelement (76) zumindest teilweise, vorzugsweise zumindest zu einem Grossteil, durch die Wandung (31) des Kühlelements (3) gebildet ist.

14. Kühlanordnung nach einem der Ansprüche 9 bis 13, wobei der Hohlkörper (81) zumindest einen Teil eines Klimamoduls (2) bildet mit
einem von der Innenfläche (85) des Hohlkörpers (81) begrenzten Hohlraum (28),
zumindest einer Lufteinlassöffnung (21), durch welche hindurch Luft in den Hohlraum (28) einströmen kann,
zumindest einer Luftauslassöffnung (22), durch welche hindurch Luft aus dem Hohlraum (28) ausströmen kann, sowie
zumindest einem Luftfördermittel (23) und/oder einer Heizung (25) und/oder einem Verdampfer (24) und/oder einem Kühlelement (3).

15. Kühlanordnung nach Anspruch 14, wobei das Klimamodul (2) zusätzlich zum Kühlelement (3) zumindest einen Verdampfer (24) und/oder eine Heizung (25) und/oder ein Luftfördermittel (23) aufweist.

16. Kühlanordnung nach Anspruch 14, wobei das Klimamodul (2) zur Kühlung des in den Fahrgastraum (11) einzuleitenden Luftstroms (110) mittels im Wesentlichen ausschliesslich dem zumindest einen Kühlelement (3) geeignet ist.

17. Kraftfahrzeug (1) mit einem Fahrgastraum (11) und zumindest einer Kühlanordnung, insbesondere einer Kühlanordnung nach einem der Ansprüche 7 bis 16, zur Kühlung eines in den Fahrgastraum (11) einzuleitenden Luftstroms (110), wobei die Kühlanordnung aufweist
zumindest ein Kühlelement (3) mit einem von einer Wandung (31) begrenzten Innenraum (30), wobei zumindest ein Teil des Kühlelements (3) als Wärmeübertragungselement (31, 70, 71, 72) ausgebildet ist, um thermische Energie von ausserhalb des Kühlelements (3) in den Innenraum (30) zu übertragen,
eine Leitstruktur (2, 2', 7, 8, 9, 17, 18, 19a, 19b, 20, 31, 70, 71, 72, 74, 91), welche dazu geeignet ist, den einzuleitenden Luftstrom (110), insbesondere gezielt, zum Wärmeübertragungselement (31, 70, 71, 72) hinzuleiten,
zumindest eine Flüssigkeitsfördereinrichtung (6) zum Zuführen einer Flüssigkeit in den Innenraum (30), sowie
zumindest eine Vakuumvorrichtung (4) zum Herstellen zumindest eines derartigen Vakuums im Innenraum (30), dass die im Innenraum (30) enthaltene Flüssigkeit siedet und/oder sublimiert.

18. Kraftfahrzeug nach Anspruch 17, wobei die Leitstruktur (8) zumindest einen Hohlkörper (81) bildet, welcher eine Innenfläche (85), zumindest eine Lufteinlassöffnung (82, 82') und zumindest eine Luftauslassöffnung (83, 83') aufweist, und welcher einen von der Innenfläche (85) begrenzten Raum (84) aufweist, der die Lufteinlassöffnung (82, 82') und die Luftauslassöffnung (83, 83') miteinander verbindet, und wobei der Hohlkörper (81) zumindest einen Teil eines ersten Klimamoduls (2) bildet mit
einem von der Innenfläche (85) des Hohlkörpers (81) begrenzten Hohlraum (28),
zumindest einer Lufteinlassöffnung (21), welche derart mit dem Fahrgastraum (11) verbunden ist, dass durch die Lufteinlassöffnung (21) hindurch Luft aus dem Fahrgastraum (11) in den Hohlraum (28) des Klimamoduls (2) einströmen kann, sowie
zumindest einer Luftauslassöffnung (22), welche derart mit dem Fahrgastraum (11) verbunden ist, dass durch die Luftauslassöffnung (22) hindurch Luft aus dem Hohlraum (28) des ersten Klimamoduls (2) in den Fahrgastraum (11) ausströmen kann,
wobei das erste Klimamodul (2) zumindest ein Kühlelement (3) aufweist, und wobei im Hohlkörper (81) und / oder im ersten Klimamodul (2) zumindest ein Luftfördermittel (19, 19') angeordnet ist zum Ansaugen von Luft aus dem Fahrgastraum (11) in das erste Klimamodul (2).

19. Kraftfahrzeug nach Anspruch 18, wobei die Luftauslassöffnung (22) des ersten Klimamoduls (2) unmittelbar in den Fahrgastraum (11) mündet oder mittels zumindest einer Leitung (19a) mit dem Fahrgastraum (11) verbunden ist.

20. Kraftfahrzeug nach Anspruch 18, wobei der Hohlkörper (81) zusätzlich zumindest eine Leitung (17, 19b) sowie zumindest einen Teil eines zweiten Klimamoduls (2') bildet, wobei die zumindest eine Leitung (17, 19b) die Luftauslassöffnung (22) des ersten Klimamoduls (2) mit dem zweiten Klimamodul (2') verbindet, so dass Luft aus dem ersten Klimamodul (2) in das zweite Klimamodul (2') strömen kann, wobei das zweite Klimamodul (2') zumindest mit dem Fahrgastraum (11) verbunden ist, so dass Luft aus dem zweiten Klimamodul (2') in den Fahrgastraum (11) strömen kann, und wobei das zweite Klimamodul (2') optional zumindest ein Luftfördermittel (19') aufweist.
